# EUROPEAN PATENT APPLICATION

(11) **EP 4 745 818 A1**
(43) Date of publication of application: **20.05.2026**
(21) Application number: 24853789.6
(22) Date of filing: 14.08.2024
(51) Int. Cl.: G06F 21/64

(54) **TRANSACTION PROCESSING METHOD AND BLOCKCHAIN**

(30) Priority: 14.08.2023 WO PCT/CN2023/112913
(71) Applicant: Huawei Technologies Co., Ltd., Shenzhen, Guangdong 518129 (CN)
(72) Inventor: LI, Xiangshi, Shenzhen, Guangdong 518129 (CN); CAO, Yuzhe, Shenzhen, Guangdong 518129 (CN); LUO, Yulong, Shenzhen, Guangdong 518129 (CN)
(74) Representative: Goddar, Heinz J.
(86) International application number: PCT/CN2024/111945
(87) International publication number: WO 2025/036381

(57) **Abstract**

Disclosed is a transaction processing method, and the method may be applied to a blockchain. The blockchain includes a first shard and a second shard. A first key (key) is stored in the first shard, and a second key is stored in the second shard. The method includes: The first shard obtains a first transaction, where the first transaction includes the first key and the second key; the first shard sends the first transaction to the second shard, generates a first block including the first transaction, and validates the first transaction in collaboration with the second shard; and the second shard receives the first transaction from the first shard, generates a second block including the first transaction, and validates the first transaction in collaboration with the first shard. This method can improve scalability of the blockchain.

## Description

This application claims priority to PCT International Patent Application No. PCT/CN2023/112913, filed under the Patent Cooperation Treaty in the World Intellectual Property Organization on August 14, 2023 and entitled "TRANSACTION PROCESSING METHOD AND BLOCKCHAIN", which is incorporated herein by reference in its entirety.

### TECHNICAL FIELD

This application relates to the field of blockchain technologies, and in particular, to a transaction processing method and a blockchain.

### BACKGROUND

A blockchain (blockchain) is a new application mode of computer technologies such as distributed data storage, point-to-point transmission, a consensus mechanism, and an encryption algorithm. The blockchain is a chained data structure obtained by combining data blocks in a chronological order, and is a distributed ledger that is protected against tampering and forging by using cryptology. Because the blockchain has features such as decentralization, information tamper resistance, and autonomy, the blockchain is also increasingly valued and applied by people. However, currently, scalability of the blockchain is poor. Therefore, how to improve scalability of the blockchain is an urgent technical problem to be resolved currently.

### SUMMARY

This application provides a transaction processing method, a blockchain, a node, a computer storage medium, and a computer program product, to improve scalability of the blockchain.

According to a first aspect, this application provides a transaction processing method. The method may be applied to a blockchain. The blockchain may include a first shard and a second shard. A first key (key) is stored in the first shard, and a second key is stored in the second shard.

The method may include: The first shard obtains a first transaction and a second transaction, where the first transaction includes the first key and the second key; the first shard forwards the first transaction to the second shard, packages the first transaction and the second transaction into a first block belonging to the first shard, validates the second transaction in the first block, and validates the first transaction in the first block in collaboration with the second shard; and the second shard receives the first transaction forwarded by the first shard, packages the first transaction into a second block belonging to the second shard, and validates the first transaction in the second block in collaboration with the first shard.

In this way, each shard in the blockchain may have an independent consensus cluster and an independent ledger node. A consensus cluster in a shard may forward a transaction to another shard, and package a transaction involving the shard into a block, and distribute the block to a ledger node in the shard. After obtaining the block sent by the consensus cluster in the shard in which the ledger node is located, the ledger node in the shard may validate the transaction in the block. When keys included in a transaction are stored on different shards, the different shards may collaboratively validate the transaction cross shards. In this way, each shard may process only a transaction involving the shard. In addition, each shard has the independent consensus cluster, which allows a transaction ordering service in the blockchain to be horizontally scaled without limit. In this manner, the blockchain is sharded in terms of a network and a state, improving scalability of the blockchain. For example, when a client commits a transaction to the first shard, the first shard may obtain the transaction committed by the client.

In a possible implementation, the blockchain includes a first endorsement node and a second endorsement node. The first transaction includes a first endorsement result, and the first endorsement result includes the first key and the second key. The second transaction includes a second endorsement result, and the second endorsement result includes the first key. The first transaction is obtained by processing the first endorsement result by a first client, and is committed to the first shard by the first client. The second transaction is obtained by processing the second endorsement result by a second client, and is committed to the first shard by the second client. For example, the first endorsement node may, but is not limited to, be the same as the second endorsement node; and the first client may, but is not limited to, be the same as the second client.

Before the first shard obtains the first transaction and the second transaction, the method may further include: The first endorsement node receives a first transaction request committed by the first client, generates a first transaction read-write set based on state data in the first shard and state data in the second shard, signs the first transaction read-write set to obtain the first endorsement result, and sends the first endorsement result to the first client, where the first transaction request is used to request to update the first key and the second key; and the second endorsement node receives a second transaction request committed by the second client, generates a second transaction read-write set based on the state data in the first shard, signs the second transaction read-write set to obtain the second endorsement result, and sends the second endorsement result to the second client, where the first transaction request is used to request to update the first key. In this way, in a cross-shard endorsement manner, one endorsement node endorses a transaction involving different shards. This improves transaction processing efficiency. For example, when a transaction request is used to request to update a plurality of different keys, the endorsement node may separately read state data on these shards storing these keys, and then update the corresponding keys based on the read state data, to generate a transaction read-write set.

In a possible implementation, both the first endorsement node and the second endorsement node are nodes in the first shard, or at least one of the first endorsement node and the second endorsement node is a node other than a node in the first shard.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result. For example, the first result may be understood as a validation result of the first transaction by the node in the first organization in the first shard; the second result may be understood as a validation result of the first transaction by the node in the first organization in the second shard; the third result may be understood as a validation result of the first transaction by the node in the second organization in the first shard; and the fourth result may be understood as a validation result of the first transaction by the node in the second organization in the second shard.

That the first shard and the second shard collaboratively validate the first transaction may include: The first shard sends the first result to a first coordinator node; the second shard sends the second result to the first coordinator node; both the first shard and the second shard receive a fifth result from the first coordinator node, where the fifth result is a validation result of the first result and the second result; the node that belongs to the first organization and that is in the first shard processes the first transaction based on the fifth result; and the node that belongs to the first organization and that is in the second shard processes the first transaction based on the fifth result, where the first coordinator node is a node other than nodes in the first shard and nodes in the second shard. The first shard sends the third result to a second coordinator node; the second shard sends the fourth result to the second coordinator node; both the first shard and the second shard receive a sixth result from the second coordinator node, where the sixth result is a validation result of the third result and the fourth result; the node that belongs to the second organization and that is in the first shard processes the first transaction based on the sixth result; and the node that belongs to the second organization and that is in the second shard processes the first transaction based on the sixth result, where the second coordinator node is a node other than the nodes in the first shard and the nodes in the second shard.

In this way, when the blockchain is the consortium blockchain, each organization has one coordinator node. When cross-shard transaction validation needs to be performed, cross-shard transaction validation may be performed in an organization by using a coordinator node in the organization. In this way, a cross-organization trust issue is overcome.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result. For example, the first result may be understood as a validation result of the first transaction by the node in the first organization in the first shard; the second result may be understood as a validation result of the first transaction by the node in the first organization in the second shard; the third result may be understood as a validation result of the first transaction by the node in the second organization in the first shard; and the fourth result may be understood as a validation result of the first transaction by the node in the second organization in the second shard.

That the first shard and the second shard collaboratively validate the first transaction may include: The first shard sends the first result to the node that belongs to the first organization and that is in the second shard; the node that belongs to the first organization and that is in the second shard validates the first result and the second result to obtain a fifth result; the second shard sends the fifth result to the node that belongs to the first organization and that is in the first shard; the node that belongs to the first organization and that is in the first shard processes the first transaction based on the fifth result; and the node that belongs to the first organization and that is in the second shard processes the first transaction based on the fifth result. The first shard sends the third result to the node that belongs to the second organization and that is in the second shard; the node that belongs to the second organization and that is in the second shard validates the third result and the fourth result to obtain a sixth result; the second shard sends the sixth result to the node that belongs to the second organization and that is in the first shard; the node that belongs to the second organization and that is in the first shard processes the first transaction based on the sixth result; and the node that belongs to the second organization and that is in the second shard processes the first transaction based on the sixth result. For example, in the second shard, a node that validates the first result and the second result may be understood as a coordinator node in the first organization, and a node that validates the third result and the fourth result may be understood as a coordinator node in the second organization.

In this way, when the blockchain is the consortium blockchain, each organization has one coordinator node. When cross-shard transaction validation needs to be performed, cross-shard transaction validation may be performed in an organization by using a coordinator node in the organization. In this way, a cross-organization trust issue is overcome.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result. For example, the first result may be understood as a validation result of the first transaction by the node in the first organization in the first shard; the second result may be understood as a validation result of the first transaction by the node in the first organization in the second shard; the third result may be understood as a validation result of the first transaction by the node in the second organization in the first shard; and the fourth result may be understood as a validation result of the first transaction by the node in the second organization in the second shard.

That the first shard and the second shard collaboratively validate the first transaction may include: The first shard sends the first result to a coordinator node; the second shard sends the second result to the coordinator node; both the first shard and the second shard receive a fifth result from the coordinator node, where the fifth result is a validation result of the first result and the second result; the node that belongs to the first organization and that is in the first shard processes the first transaction based on the fifth result; and the node that belongs to the first organization and that is in the second shard processes the first transaction based on the fifth result, where the first coordinator node is a node other than nodes in the first shard and nodes in the second shard. The first shard sends the third result to the node that belongs to the second organization and that is in the second shard; the node that belongs to the second organization and that is in the second shard validates the third result and the fourth result to obtain a sixth result; the second shard sends the sixth result to the node that belongs to the second organization and that is in the first shard; the node that belongs to the second organization and that is in the first shard processes the first transaction based on the sixth result; and the node that belongs to the second organization and that is in the second shard processes the first transaction based on the sixth result. For example, in the second shard, a node that validates the third result and the fourth result may be understood as a coordinator node in the second organization. For example, that the first shard and the second shard collaboratively validate the first transaction may be understood as cross-shard transaction validation.

In this way, when the blockchain is the consortium blockchain, each organization has one coordinator node. When cross-shard transaction validation needs to be performed, cross-shard transaction validation may be performed in an organization by using a coordinator node in the organization. In this way, a cross-organization trust issue is overcome.

In a possible implementation, the blockchain includes a first deadlock resolution node and a second deadlock resolution node, the first deadlock resolution node belongs to the first organization, and the second deadlock resolution node belongs to the second organization. That is, when the blockchain is the consortium blockchain, each organization in the consortium blockchain has one deadlock resolution node.

In this case, the method may further include: When a first target node obtains any one of the first result and the second result, but does not obtain the other within first duration, the first deadlock resolution node constructs a dependency graph that is related to the first transaction and that is in a convergent state, where the first target node is configured to validate the first result and the second result, and the dependency graph includes at least one transaction that prevents the first transaction from being validated; and when a second target node obtains any one of the third result and the fourth result, but does not obtain the other within the first duration, the second deadlock resolution node constructs a dependency graph, where the second target node is configured to validate the third result and the fourth result. For example, both the first target node and the second target node may be referred to as coordinator nodes.

In this way, when a deadlock occurs, deadlock resolution nodes in different organizations can construct a same dependency graph, so that subsequent deadlock resolution results of different organizations are consistent.

In a possible implementation, the method further includes: The first deadlock resolution node marks, according to a first rule, at least one transaction included in the dependency graph constructed by the first deadlock resolution node as invalid; and the second deadlock resolution node marks, according to the first rule, at least one transaction included in the dependency graph constructed by the second deadlock resolution node as invalid. In this way, different deadlock resolution nodes use a same deadlock resolution rule, so that it can ensured that the deadlock resolution results of different organizations are consistent. This can ensure transaction atomicity.

In a possible implementation, the first deadlock resolution node is a node that belongs to the first organization and that is in the first shard, or is a node that belongs to the first organization and that is in the second shard, or is a node that belongs to the first organization and that is outside the first shard and the second shard.

The second deadlock resolution node is a node that belongs to the second organization and that is in the first shard, or is a node that belongs to the second organization and that is in the second shard, or is a node that belongs to the second organization and that is outside the first shard and the second shard.

In a possible implementation, the blockchain is the consortium blockchain, the consortium blockchain includes the first organization and the second organization, the first shard includes a first primary node and a second primary node, the first primary node belongs to the first organization, and the second primary node belongs to the second organization.

In this case, the method may further include: The first primary node monitors the node that belongs to the first organization and that is in the second shard, and selects a third primary node from the second shard, where the third primary node belongs to the first organization; the second primary node monitors the node that belongs to the second organization and that is in the second shard, and selects a fourth primary node from the second shard, where the fourth primary node belongs to the second organization; the third primary node monitors the node that belongs to the first organization and that is in the first shard, selects a fifth primary node from the first shard when the first primary node is abnormal, where the fifth primary node belongs to the first organization; and the fourth primary node monitors the node that belongs to the second organization and that is in the first shard, and selects a sixth primary node from the first shard when the second primary node is abnormal, where the sixth primary node belongs to the second organization.

In this way, a cyclic sentinel mechanism is used to select a primary node, but no additional sentinel cluster is added. Instead, a primary node in an organization in an adjacent shard serves as a sentinel of a node in the organization in another shard, and monitors a node in the another shard. In addition, the primary node serving as the sentinel randomly selects or assigns a node as a primary node for a node in the corresponding organization in the another shard. This simplifies a primary node selection procedure in the shards. As long as there is a primary node that does not break down in a shard, primary node re-selection recovery of all the shards can be implemented.

In a possible implementation, the shards in the blockchain are obtained through division based on code edited by a blockchain manager. In this way, the blockchain manager can quickly divide the blockchain into shards based on a requirement of the blockchain manager. This simplifies a procedure of sharding the blockchain, and improves flexibility and freedom of sharding the blockchain.

According to a second aspect, this application provides a transaction processing method. The method may be applied to an endorsement node in a blockchain. The blockchain includes a first shard and a second shard. A first key (key) is stored in the first shard, and a second key is stored in the second shard. The method may include: receiving a transaction request from a client, where the transaction request is used to request to update the first key and the second key; generating a transaction read-write set based on state data in the first shard and state data in the second shard; signing the transaction read-write set to obtain an endorsement result; and sending the endorsement result to the client. In this way, in a cross-shard endorsement manner, one endorsement node endorses a transaction involving different shards. This improves transaction processing efficiency. For example, when a transaction request is used to request to update a plurality of different keys, the endorsement node may separately read state data on these shards storing these keys, and then update the corresponding keys based on the read state data, to generate a transaction read-write set.

According to a third aspect, this application provides a blockchain. The blockchain includes a first shard and a second shard. A first key (key) is stored in the first shard, and a second key is stored in the second shard. The first shard is responsible for obtaining a first transaction and a second transaction, and the first transaction includes the first key and the second key. The first shard is further responsible for forwarding the first transaction to the second shard, packaging the first transaction and the second transaction into a first block belonging to the first shard, validating the second transaction in the first block, and validating the first transaction in the first block in collaboration with the second shard. The second shard is responsible for receiving the first transaction forwarded by the first shard, packaging the first transaction into a second block belonging to the second shard, and validating the first transaction in the second block in collaboration with the first shard.

In a possible implementation, the blockchain includes a first endorsement node and a second endorsement node. The first transaction includes a first endorsement result, and the first endorsement result includes the first key and the second key. The second transaction includes a second endorsement result, and the second endorsement result includes the first key. The first transaction is obtained by processing the first endorsement result by a first client, and is committed to the first shard by the first client. The second transaction is obtained by processing the second endorsement result by a second client, and is committed to the first shard by the second client.

Before the first shard obtains the first transaction and the second transaction, the first endorsement node is responsible for receiving a first transaction request committed by the first client, generating a first transaction read-write set based on state data in the first shard and state data in the second shard, signing the first transaction read-write set to obtain the first endorsement result, and sending the first endorsement result to the first client, where the first transaction request is used to request to update the first key and the second key. Before the first shard obtains the first transaction and the second transaction, the second endorsement node is responsible for receiving a second transaction request committed by the second client, generating a second transaction read-write set based on the state data in the first shard, signing the second transaction read-write set to obtain the second endorsement result, and sending the second endorsement result to the second client, where the first transaction request is used to request to update the first key.

In a possible implementation, both the first endorsement node and the second endorsement node are nodes in the first shard, or at least one of the first endorsement node and the second endorsement node is a node other than a node in the first shard.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

When the first shard and the second shard collaboratively validate the first transaction, the first shard is responsible for sending the first result to a first coordinator node, the second shard is responsible for sending the second result to the first coordinator node, both the first shard and the second shard are responsible for receiving a fifth result from the first coordinator node, where the fifth result is a validation result of the first result and the second result, the node that belongs to the first organization and that is in the first shard is responsible for processing the first transaction based on the fifth result, and the node that belongs to the first organization and that is in the second shard is responsible for processing the first transaction based on the fifth result, where the first coordinator node is a node other than nodes in the first shard and nodes in the second shard; and the first shard is responsible for sending the third result to a second coordinator node, the second shard is responsible for sending the fourth result to the second coordinator node, both the first shard and the second shard are responsible for receiving a sixth result from the second coordinator node, where the sixth result is a validation result of the third result and the fourth result, the node that belongs to the second organization and that is in the first shard is responsible for processing the first transaction based on the sixth result, and the node that belongs to the second organization and that is in the second shard is responsible for processing the first transaction based on the sixth result, where the second coordinator node is a node other than the nodes in the first shard and the nodes in the second shard.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

When the first shard and the second shard collaboratively validate the first transaction, the first shard is responsible for sending the first result to the node that belongs to the first organization and that is in the second shard, the node that belongs to the first organization and that is in the second shard is responsible for validating the first result and the second result to obtain a fifth result, the second shard is responsible for sending the fifth result to the node that belongs to the first organization and that is in the first shard, the node that belongs to the first organization and that is in the first shard is responsible for processing the first transaction based on the fifth result, and the node that belongs to the first organization and that is in the second shard is responsible for processing the first transaction based on the fifth result; and the first shard is responsible for sending the third result to the node that belongs to the second organization and that is in the second shard, the node that belongs to the second organization and that is in the second shard is responsible for validating the third result and the fourth result to obtain a sixth result, the second shard is responsible for sending the sixth result to the node that belongs to the second organization and that is in the first shard, the node that belongs to the second organization and that is in the first shard is responsible for processing the first transaction based on the sixth result, and the node that belongs to the second organization and that is in the second shard is responsible for processing the first transaction based on the sixth result.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

When the first shard and the second shard collaboratively validate the first transaction, the first shard is responsible for sending the first result to a coordinator node, the second shard is responsible for sending the second result to the coordinator node, both the first shard and the second shard are responsible for receiving a fifth result from the coordinator node, where the fifth result is a validation result of the first result and the second result, the node that belongs to the first organization and that is in the first shard is responsible for processing the first transaction based on the fifth result, and the node that belongs to the first organization and that is in the second shard is responsible for processing the first transaction based on the fifth result, where the first coordinator node is a node other than nodes in the first shard and nodes in the second shard; and the first shard is responsible for sending the third result to the node that belongs to the second organization and that is in the second shard, the node that belongs to the second organization and that is in the second shard is responsible for validating the third result and the fourth result to obtain a sixth result, the second shard is responsible for sending the sixth result to the node that belongs to the second organization and that is in the first shard, the node that belongs to the second organization and that is in the first shard is responsible for processing the first transaction based on the sixth result, and the node that belongs to the second organization and that is in the second shard is responsible for processing the first transaction based on the sixth result.

In a possible implementation, the blockchain includes a first deadlock resolution node and a second deadlock resolution node, the first deadlock resolution node belongs to the first organization, and the second deadlock resolution node belongs to the second organization.

When a first target node obtains any one of the first result and the second result, but does not obtain the other within first duration, the first deadlock resolution node is responsible for constructing a dependency graph that is related to the first transaction and that is in a convergent state, where the first target node is configured to validate the first result and the second result, and the dependency graph includes at least one transaction that prevents the first transaction from being validated; and when a second target node obtains any one of the third result and the fourth result, but does not obtain the other within the first duration, the second deadlock resolution node is responsible for constructing a dependency graph, where the second target node is configured to validate the third result and the fourth result.

In a possible implementation, the first deadlock resolution node is further responsible for marking, according to a first rule, at least one transaction included in the dependency graph constructed by the first deadlock resolution node as invalid. The second deadlock resolution node is further responsible for marking, according to the first rule, at least one transaction included in the dependency graph constructed by the second deadlock resolution node as invalid.

In a possible implementation, the first deadlock resolution node is a node that belongs to the first organization and that is in the first shard, or is a node that belongs to the first organization and that is in the second shard, or is a node that belongs to the first organization and that is outside the first shard and the second shard. The second deadlock resolution node is a node that belongs to the second organization and that is in the first shard, or is a node that belongs to the second organization and that is in the second shard, or is a node that belongs to the second organization and that is outside the first shard and the second shard.

In a possible implementation, the blockchain is the consortium blockchain, the consortium blockchain includes the first organization and the second organization, the first shard includes a first primary node and a second primary node, the first primary node belongs to the first organization, and the second primary node belongs to the second organization.

The first primary node is responsible for monitoring the node that belongs to the first organization and that is in the second shard, and selecting a third primary node from the second shard, where the third primary node belongs to the first organization. The second primary node is responsible for monitoring the node that belongs to the second organization and that is in the second shard, and selecting a fourth primary node from the second shard, where the fourth primary node belongs to the second organization. The third primary node is responsible for monitoring the node that belongs to the first organization and that is in the first shard, and selecting a fifth primary node from the first shard when the first primary node is abnormal, where the fifth primary node belongs to the first organization. The fourth primary node is responsible for monitoring the node that belongs to the second organization and that is in the first shard, and selecting a sixth primary node from the first shard when the second primary node is abnormal, where the sixth primary node belongs to the second organization.

In a possible implementation, the shards in the blockchain are obtained through division based on code edited by a blockchain manager.

According to a fourth aspect, this application provides a transaction processing method, applied to a blockchain. The blockchain includes a first shard and a second shard. A first key (key) is stored in the first shard, and a second key is stored in the second shard. The method includes: The first shard obtains a first transaction, where the first transaction includes the first key and the second key; the first shard sends the first transaction to the second shard, generates a first block including the first transaction, and validates the first transaction in collaboration with the second shard; and the second shard receives the first transaction from the first shard, generates a second block including the first transaction, and validates the first transaction in collaboration with the first shard.

In a possible implementation, before the first shard sends the first transaction to the second shard, the method further includes: reading state data in the first shard and state data in the second shard, to ensure execution of the first transaction.

In a possible implementation, the blockchain includes a coordinator node, and that the first shard and the second shard collaboratively validate the first transaction includes: The first shard and the second shard respectively sends a first validation result and a second validation result to the coordinator node, where the first validation result is a result of validating the first transaction by the first shard, and the second validation result is a result of validating the first transaction by the second shard; and the coordinator node obtains the first validation result and the second validation result to determine whether the first transaction is valid.

In a possible implementation, the method further includes: When a plurality of transactions on different shards in the blockchain wait for each other, a deadlock resolution node in the blockchain identifies a deadlock in the blockchain and resolves the deadlock.

In a possible implementation, there are a plurality of deadlock resolution nodes, and different deadlock resolution nodes resolve deadlocks according to a same rule.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

In this case, that the first shard and the second shard collaboratively validate the first transaction includes:
The first shard sends the first result to a first coordinator node; the second shard sends the second result to the first coordinator node; both the first shard and the second shard receive a fifth result from the first coordinator node, where the fifth result is a validation result of the first result and the second result; the node that belongs to the first organization and that is in the first shard processes the first transaction based on the fifth result; and the node that belongs to the first organization and that is in the second shard processes the first transaction based on the fifth result, where the first coordinator node is a node other than nodes in the first shard and nodes in the second shard; and
the first shard sends the third result to a second coordinator node; the second shard sends the fourth result to the second coordinator node; both the first shard and the second shard receive a sixth result from the second coordinator node, where the sixth result is a validation result of the third result and the fourth result; the node that belongs to the second organization and that is in the first shard processes the first transaction based on the sixth result; and the node that belongs to the second organization and that is in the second shard processes the first transaction based on the sixth result, where the second coordinator node is a node other than the nodes in the first shard and the nodes in the second shard.
In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

In this case, that the first shard and the second shard collaboratively validate the first transaction includes:
The first shard sends the first result to the node that belongs to the first organization and that is in the second shard; the node that belongs to the first organization and that is in the second shard validates the first result and the second result to obtain a fifth result; the second shard sends the fifth result to the node that belongs to the first organization and that is in the first shard; the node that belongs to the first organization and that is in the first shard processes the first transaction based on the fifth result; and the node that belongs to the first organization and that is in the second shard processes the first transaction based on the fifth result; and
the first shard sends the third result to the node that belongs to the second organization and that is in the second shard; the node that belongs to the second organization and that is in the second shard validates the third result and the fourth result to obtain a sixth result; the second shard sends the sixth result to the node that belongs to the second organization and that is in the first shard; the node that belongs to the second organization and that is in the first shard processes the first transaction based on the sixth result; and the node that belongs to the second organization and that is in the second shard processes the first transaction based on the sixth result.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

In this case, that the first shard and the second shard collaboratively validate the first transaction includes:
The first shard sends the first result to a coordinator node; the second shard sends the second result to the coordinator node; both the first shard and the second shard receive a fifth result from the coordinator node, where the fifth result is a validation result of the first result and the second result; the node that belongs to the first organization and that is in the first shard processes the first transaction based on the fifth result; and the node that belongs to the first organization and that is in the second shard processes the first transaction based on the fifth result, where the coordinator node is a node other than nodes in the first shard and nodes in the second shard; and
the first shard sends the third result to the node that belongs to the second organization and that is in the second shard; the node that belongs to the second organization and that is in the second shard validates the third result and the fourth result to obtain a sixth result; the second shard sends the sixth result to the node that belongs to the second organization and that is in the first shard; the node that belongs to the second organization and that is in the first shard processes the first transaction based on the sixth result; and the node that belongs to the second organization and that is in the second shard processes the first transaction based on the sixth result.

In a possible implementation, the blockchain includes a first deadlock resolution node and a second deadlock resolution node. In this case, the method further includes: when sequences of a plurality of transactions in the first organization in different shards of the blockchain are different, and the plurality of transactions in the first organization wait for each other's validation results, the first deadlock resolution node identifies a deadlock formed due to a transaction dependency in the first organization, and resolves the deadlock; and when sequences of a plurality of transactions in the second organization in different shards of the blockchain are different, and the plurality of transactions in the second organization wait for each other's validation results, the second deadlock resolution node identifies a deadlock formed due to a transaction dependency in the second organization, and resolves the deadlock.

In a possible implementation, the method further includes: The first deadlock resolution node and the second deadlock resolution node resolve the deadlocks according to a same rule.

In a possible implementation, the blockchain is the consortium blockchain, the consortium blockchain includes the first organization and the second organization, the first shard includes a first primary node and a second primary node, the first primary node belongs to the first organization, and the second primary node belongs to the second organization. In this case, the method further includes:
The first primary node monitors the node that belongs to the first organization and that is in the second shard, and selects a third primary node from the second shard, where the third primary node belongs to the first organization;
the second primary node monitors the node that belongs to the second organization and that is in the second shard, and selects a fourth primary node from the second shard, where the fourth primary node belongs to the second organization;
the third primary node monitors the node that belongs to the first organization and that is in the first shard, and selects a fifth primary node from the first shard when the first primary node is abnormal, where the fifth primary node belongs to the first organization; and
the fourth primary node monitors the node that belongs to the second organization and that is in the first shard, and selects a sixth primary node from the first shard when the second primary node is abnormal, where the sixth primary node belongs to the second organization.

In a possible implementation, the method further includes:
A first primary node in the first shard monitors a node in the second shard, and selects a second primary node from the second shard;
the second primary node monitors a node in the second shard, and selects a third primary node from the second shard; and
the third primary node monitors a node in the first shard, and selects a fourth primary node from the first shard when the first primary node is abnormal.

According to a fifth aspect, this application provides a transaction processing method, applied to a blockchain. The blockchain includes a plurality of shards. The method includes: When a first transaction needs to be processed across shards, one shard in the blockchain forwards the first transaction to a shard capable of processing the first transaction in the blockchain, where a plurality of first shards in the blockchain each generate a block including the first transaction, and the first shard is a shard capable of processing the first transaction; and the plurality of first shards collaboratively validate the first transaction.

In a possible implementation, each shard in the blockchain has a capability of independently processing a transaction.

In a possible implementation, before the one shard in the blockchain forwards the first transaction to the shard capable of processing the first transaction in the blockchain, the method further includes: reading a state of each of the plurality of first shards, to ensure completion of execution of the first transaction.

In a possible implementation, the method further includes: When a second shard that endorses a second transaction in the blockchain is different from a third shard that processes the second transaction, an endorsement node related to the second shard in the blockchain reads state data in the third shard, to endorse the second transaction.

In a possible implementation, the method further includes: When a fourth shard in the blockchain receives a third transaction, and the third transaction is irrelevant to the fourth shard, the fourth shard forwards the third transaction to a fifth shard capable of processing the third transaction in the blockchain.

In a possible implementation, that the plurality of first shards collaboratively validate the first transaction in the block generated by each first shard includes: collecting a validation result of each first shard, to determine whether the first transaction is valid, where one validation result is obtained by one first shard by validating the first transaction in a block generated by the first shard.

In a possible implementation, the method further includes: When a plurality of transactions on different shards in the blockchain wait for each other, a deadlock resolution node in the blockchain identifies a deadlock in the blockchain and resolves the deadlock.

In a possible implementation, there are a plurality of deadlock resolution nodes, and different dedicated nodes resolve deadlocks according to a same rule.

In a possible implementation, the shards in the blockchain are obtained through division according to a user-configured sharding strategy.

In a possible implementation, in the blockchain, a node in one shard is a sentinel node in another shard, each shard has an independent sentinel node, and sentinel nodes in different shards are different.

According to a sixth aspect, this application provides a blockchain. The blockchain includes a first shard and a second shard. A first key (key) is stored in the first shard, and a second key is stored in the second shard. The first shard is responsible for obtaining a first transaction, and the first transaction includes the first key and the second key. The first shard is further responsible for sending the first transaction to the second shard, generating a first block including the first transaction, and validating the first transaction in collaboration with the second shard. The second shard is responsible for receiving the first transaction from the first shard, generating a second block including the first transaction, and validating the first transaction in collaboration with the first shard.

In a possible implementation, before the first shard sends the first transaction to the second shard, a node in the blockchain is responsible for reading state data in the first shard and state data in the second shard, to ensure execution of the first transaction.

In a possible implementation, the blockchain includes a coordinator node. The first shard and the second shard are separately responsible for sending a first validation result and a second validation result to the coordinator node, where the first validation result is a result of validating the first transaction by the first shard, and the second validation result is a result of validating the first transaction by the second shard. The coordinator node is responsible for obtaining the first validation result and the second validation result to determine whether the first transaction is valid.

In a possible implementation, when a plurality of transactions on different shards in the blockchain wait for each other, a deadlock resolution node in the blockchain is responsible for identifying a deadlock in the blockchain and resolving the deadlock.

In a possible implementation, there are a plurality of deadlock resolution nodes, and different deadlock resolution nodes resolve deadlocks according to a same rule.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

In this case, the first shard is further responsible for sending the first result to a first coordinator node; the second shard is further responsible for sending the second result to the first coordinator node; both the first shard and the second shard are further responsible for receiving a fifth result from the first coordinator node, where the fifth result is a validation result of the first result and the second result; the node that belongs to the first organization and that is in the first shard is responsible for processing the first transaction based on the fifth result; and the node that belongs to the first organization and that is in the second shard is responsible for processing the first transaction based on the fifth result, where the first coordinator node is a node other than nodes in the first shard and nodes in the second shard.

The first shard is further responsible for sending the third result to a second coordinator node; the second shard is further responsible for sending the fourth result to the second coordinator node; both the first shard and the second shard are further responsible for receiving a sixth result from the second coordinator node, where the sixth result is a validation result of the third result and the fourth result; the node that belongs to the second organization and that is in the first shard is responsible for processing the first transaction based on the sixth result; and the node that belongs to the second organization and that is in the second shard is responsible for processing the first transaction based on the sixth result, where the second coordinator node is a node other than the nodes in the first shard and the nodes in the second shard.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

In this case, the first shard is further responsible for sending the first result to the node that belongs to the first organization and that is in the second shard; the node that belongs to the first organization and that is in the second shard is responsible for validating the first result and the second result to obtain a fifth result; the second shard is further responsible for sending the fifth result to the node that belongs to the first organization and that is in the first shard; the node that belongs to the first organization and that is in the first shard is responsible for processing the first transaction based on the fifth result; and the node that belongs to the first organization and that is in the second shard is responsible for processing the first transaction based on the fifth result.

The first shard is further responsible for sending the third result to the node that belongs to the second organization and that is in the second shard; the node that belongs to the second organization and that is in the second shard is responsible for validating the third result and the fourth result to obtain a sixth result; the second shard is further responsible for sending the sixth result to the node that belongs to the second organization and that is in the first shard; the node that belongs to the second organization and that is in the first shard is responsible for processing the first transaction based on the sixth result; and the node that belongs to the second organization and that is in the second shard is responsible for processing the first transaction based on the sixth result.

In a possible implementation, the blockchain is a consortium blockchain, and the consortium blockchain includes a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result.

In this case, the first shard is further responsible for sending the first result to a coordinator node; the second shard is further responsible for sending the second result to the coordinator node; both the first shard and the second shard are further responsible for receiving a fifth result from the coordinator node, where the fifth result is a validation result of the first result and the second result; the node that belongs to the first organization and that is in the first shard is responsible for processing the first transaction based on the fifth result; and the node that belongs to the first organization and that is in the second shard is responsible for processing the first transaction based on the fifth result, where the coordinator node is a node other than nodes in the first shard and nodes in the second shard.

The first shard is further responsible for sending the third result to the node that belongs to the second organization and that is in the second shard; the node that belongs to the second organization and that is in the second shard is responsible for validating the third result and the fourth result to obtain a sixth result; the second shard is further responsible for sending the sixth result to the node that belongs to the second organization and that is in the first shard; the node that belongs to the second organization and that is in the first shard is responsible for processing the first transaction based on the sixth result; and the node that belongs to the second organization and that is in the second shard is responsible for processing the first transaction based on the sixth result.

In a possible implementation, the blockchain includes a first deadlock resolution node and a second deadlock resolution node. In this case, when sequences of a plurality of transactions in the first organization in different shards of the blockchain are different, and the plurality of transactions in the first organization wait for each other's validation results, the first deadlock resolution node is responsible for identifying a deadlock formed due to a transaction dependency in the first organization, and resolving the deadlock. When sequences of a plurality of transactions in the second organization in different shards of the blockchain are different, and the plurality of transactions in the second organization wait for each other's validation results, the second deadlock resolution node is responsible for identifying a deadlock formed due to a transaction dependency in the second organization, and resolving the deadlock.

In a possible implementation, the first deadlock resolution node and the second deadlock resolution node resolve the deadlocks according to a same rule.

In a possible implementation, the blockchain is the consortium blockchain, the consortium blockchain includes the first organization and the second organization, the first shard includes a first primary node and a second primary node, the first primary node belongs to the first organization, and the second primary node belongs to the second organization. In this case, the first primary node is responsible for monitoring the node that belongs to the first organization and that is in the second shard, and selecting a third primary node from the second shard, where the third primary node belongs to the first organization. The second primary node is responsible for monitoring the node that belongs to the second organization and that is in the second shard, and selecting a fourth primary node from the second shard, where the fourth primary node belongs to the second organization. The third primary node is responsible for monitoring the node that belongs to the first organization and that is in the first shard, and selecting a fifth primary node from the first shard when the first primary node is abnormal, where the fifth primary node belongs to the first organization. The fourth primary node is responsible for monitoring the node that belongs to the second organization and that is in the first shard, and selecting a sixth primary node from the first shard when the second primary node is abnormal, where the sixth primary node belongs to the second organization.

In a possible implementation, a first primary node in the first shard is responsible for monitoring a node in the second shard, and selecting a second primary node from the second shard. In this case, the second primary node is responsible for monitoring a node in the second shard, and selecting a third primary node from the second shard. The third primary node is responsible for monitoring a node in the first shard, and selecting a fourth primary node from the first shard when the first primary node is abnormal.

According to a seventh aspect, this application provides a blockchain. The blockchain includes a plurality of shards. When a first transaction needs to be processed across shards, one shard in the blockchain is responsible for forwarding the first transaction to a shard capable of processing the first transaction in the blockchain. A plurality of first shards in the blockchain each are responsible for generating a block including the first transaction, and the first shard is a shard capable of processing the first transaction. The plurality of first shards are responsible for collaboratively validating the first transaction.

In a possible implementation, each shard in the blockchain has a capability of independently processing a transaction.

In a possible implementation, before the one shard in the blockchain forwards the first transaction to the shard capable of processing the first transaction in the blockchain, a node in the blockchain is further responsible for reading a state of each of the plurality of first shards, to ensure completion of execution of the first transaction.

In a possible implementation, when a second shard that endorses a second transaction in the blockchain is different from a third shard that processes the second transaction, an endorsement node related to the second shard in the blockchain is responsible for reading state data in the third shard, to endorse the second transaction.

In a possible implementation, when a fourth shard in the blockchain receives a third transaction, and the third transaction is irrelevant to the fourth shard, the fourth shard is responsible for forwarding the third transaction to a fifth shard capable of processing the third transaction in the blockchain.

In a possible implementation, when the plurality of first shards collaboratively validate the first transaction in the block generated by each first shard, a node in the blockchain is responsible for collecting a validation result of each first shard, to determine whether the first transaction is valid, where one validation result is obtained by one first shard by validating the first transaction in a block generated by the first shard.

In a possible implementation, when a plurality of transactions on different shards in the blockchain wait for each other, a deadlock resolution node in the blockchain is responsible for identifying a deadlock in the blockchain and resolving the deadlock.

In a possible implementation, there are a plurality of deadlock resolution nodes, and different deadlock resolution nodes resolve deadlocks according to a same rule.

In a possible implementation, the shards in the blockchain are obtained through division according to a user-configured sharding strategy.

In a possible implementation, in the blockchain, a node in one shard is a sentinel node in another shard, each shard has an independent sentinel node, and sentinel nodes in different shards are different.

According to an eighth aspect, this application provides a node. The node is deployed in a blockchain. The blockchain includes a first shard and a second shard. A first key (key) is stored in the first shard, and a second key is stored in the second shard. The node includes: a communication module, configured to receive a transaction request from a client, where the transaction request is used to request to update the first key and the second key; and a processing module, configured to: generate a transaction read-write set based on state data in the first shard and state data in the second shard, and sign the transaction read-write set to obtain an endorsement result. The communication module is further responsible for sending the endorsement result to the client.

According to a ninth aspect, this application provides a computer-readable storage medium. The computer-readable storage medium stores a computer program, and when the computer program runs on a processor, the processor is enabled to perform the method described in the first aspect or the third aspect.

According to a tenth aspect, this application provides a computer program product. When the computer program product runs on a processor, the processor is enabled to perform the method described in the first aspect or the third aspect.

It may be understood that, for beneficial effect of the third aspect to the tenth aspect, refer to the related descriptions in the first aspect and the second aspect. Details are not described herein again.

### BRIEF DESCRIPTION OF DRAWINGS

FIG. 1 is a diagram of an architecture of extending a blockchain network through state sharding according to an embodiment of this application;
FIG. 2 is a diagram of a system architecture of a blockchain according to an embodiment of this application;
FIG. 3 is a diagram of a structure of a blockchain according to an embodiment of this application;
FIG. 4 is a diagram of a structure of another blockchain according to an embodiment of this application;
FIG. 5 is a diagram of a working process of a blockchain according to an embodiment of this application;
FIG. 6 is a diagram of a working process of another blockchain according to an embodiment of this application;
FIG. 7 is a diagram of cross-shard transaction validation in a blockchain according to an embodiment of this application;
FIG. 8 is a diagram of cross-shard transaction validation in another blockchain according to an embodiment of this application;
FIG. 9 is a diagram of a process of constructing a dependency graph in a blockchain according to an embodiment of this application;
FIG. 10 is a diagram of a process of constructing a dependency graph in another blockchain according to an embodiment of this application;
FIG. 11 is a diagram of a process of constructing a dependency graph in still another blockchain according to an embodiment of this application;
FIG. 12 is a diagram of a sentinel primary node selection mechanism in a blockchain according to an embodiment of this application; and
FIG. 13 is a schematic flowchart of a transaction processing method according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this specification, the terms "first", "second", and the like are intended to distinguish between different objects, but do not indicate a particular order of the objects. For example, a first response message, a second response message, and the like are used to distinguish between different response messages, but do not indicate a particular sequence of the response messages.

In embodiments of this application, words such as "example" or "for example" represents giving an example, an illustration, or a description. Any embodiment or design solution described as "example" or "for example" in embodiments of this application should not be explained as being more preferred or having more advantages than another embodiment or design solution. To be precise, use of the words such as "example" or "for example" is intended to present a relative concept in a specific manner.

In descriptions of embodiments of this application, unless otherwise specified, "a plurality of" means two or more. For example, a plurality of processing units mean two or more processing units, and a plurality of elements mean two or more elements.

First, some technical terms in embodiments of this application are described.

### (1) Blockchain

A blockchain is a chained data structure obtained by combining data blocks in a chronological order, and is a distributed ledger that is protected against tampering and forging by using cryptology. In a broad sense, the blockchain is an infrastructure platform that uses a consensus algorithm to generate and update data, uses a cryptography technology to ensure data security and tamper resistance, and uses an automated script to form a smart contract for programming and operating data.

### (2) Consortium blockchain

The consortium blockchain is a distributed ledger system based on a blockchain technology. Participants of the consortium blockchain are a group of organizations that have established trust and cooperation relationships. Unlike a public blockchain, the consortium blockchain has limited participants who jointly manage and maintain the blockchain. An organization in the consortium blockchain is an entity that participates in a blockchain service network, for example, an enterprise, a government agency, or a group. Each node in the consortium blockchain belongs to a specific organization.

### (3) Node in the blockchain

The node in the blockchain may be any apparatus, server, device cluster, or the like with computing and processing capabilities.

### (4) Endorsement node

The endorsement node is a node that undertakes an endorsement task in the blockchain. In the blockchain, there may be one or more endorsement nodes. When the blockchain is the consortium blockchain, each organization in the consortium blockchain has one or more endorsement nodes. For example, the endorsement task may include simulating execution of a transaction request (proposal) and performing endorsement.

### (5) Ledger node

The ledger node is mainly responsible for maintaining and storing a ledger in the blockchain. In the blockchain, each ledger node has a copy of a complete blockchain ledger, and the blockchain ledger includes a plurality of blocks and state information corresponding to each block. Some ledger nodes may undertake endorsement functions in the blockchain. In this case, these nodes are also referred to as endorsement nodes. For example, the ledger node may also be referred to as a "node".

### (6) Consensus node

The consensus node is a node that participates in the consensus algorithm in the blockchain. In the blockchain, the consensus node is mainly responsible for executing the consensus algorithm to agree on a plurality of transactions included in a new block and an arrangement sequence of the plurality of transactions. The consensus algorithm is a protocol or mechanism used to ensure all nodes agree on a consensus proposal, thereby maintaining consistency of the entire blockchain. The consensus algorithm may include proof-of-work (proof-of-work, PoW), proof-of-stake (proof-of-stake, PoS), proof-of-stake with delegated proof-of-stake (proof-of-stake with delegated proof-of-stake, PoS with DPoS), byzantine fault tolerance (byzantine fault tolerance, BFT), and the like.

### (7) Primary (master) node and secondary node in the blockchain

Both the primary node and the secondary node in the blockchain may be ledger nodes. The primary node is mainly responsible for coordinating a cross-shard transaction. The secondary node is mainly responsible for synchronizing a coordination result from the primary node. For example, when a shard 1 and a shard 2 need to perform cross-shard validation on a transaction T, a primary node in the shard 1 may send a validation result of the shard 1 on the transaction T to a coordinator node, and a primary node in the shard 2 may send a validation result of the shard 2 on the transaction T to the coordinator node. The coordinator node may validate the two validation results, and send the validation results to the primary node in the shard 1 and the primary node in the shard 2, respectively. Then, the primary node in the shard 1 may synchronize the result obtained from the coordinator node to a secondary node in the shard 1. Similarly, the primary node in the shard 2 may synchronize the result obtained from the coordinator node to a secondary node in the shard 2.

### (8) Block

The block in the blockchain is a data structure formed by packaging a plurality of transactions. The block is divided into two parts: a block header and a block body. The block header includes a hash value of a previous block header, a timestamp generated by the block, a transaction root, a receipt root, a state root, and the like. The transaction root is a root hash value of a transaction tree constituted by the plurality of transactions included in the block, the receipt root is a root hash value of a receipt tree constituted by receipts of the plurality of transactions, and the state root is a root hash value of a state tree corresponding to the block.

### (9) Smart contract

The smart contract is a contract that may be triggered and executed by a transaction on the blockchain. The smart contract may be defined in a form of code. Invoking the smart contract on the Ethereum is initiating a transaction directed to a smart contract address, so that each node in an Ethereum network runs smart contract code in a distributed manner. It should be noted that, in addition to being created by a user, the smart contract may alternatively be set by a system in a genesis block. This type of contract is commonly referred to as a system contract. Generally, some data structures, parameters, attributes, and methods of the blockchain may be set in the system contract. In addition, an account with system administrator permission may create or modify a system-level contract (which is briefly referred to as a system contract). The system contract may be used to add a data structure of data of different services to the blockchain.

### (10) Ordering service

The ordering service is a distributed cluster, and is responsible for ordering transactions and reaching a global consensus by running the consensus algorithm.

### (11) Transaction read-write set

The transaction read-write set is a set including read and write data key values generated after a transaction in the blockchain executes service logic of the smart contract. The transaction read-write set may include a read set (read set) and a write set (write set). The read set includes a version of a key (key), and the write set includes a latest value of a key. The version of the key is a unique identifier that makes each key unique. There are many implementations, for example, a monotonically increasing value may be used for indication. For example, the read set may be <read key="key 1", version="1 ">. In this example, a read key is the key 1, and a version of the key 1 is 1. The write set may be <write key="key 1", value="V1">. In this example, a latest value of the key 1 is V1.

### (12) State data in a shard in the blockchain

In shards in the blockchain, each shard has independent state data. Each shard records a value and a version of a key, a contract state, asset ownership, and other information for which the shard is responsible. The state data continuously changes as a new block is added to each shard. In state data of a shard, a stored key for which the shard is responsible, and a version and a value of the key may form a tuple (k, ver, val). In the tuple, k indicates the key, ver indicates the version of the key, and val indicates the value of the key. For example, in this embodiment, the state data may also be referred to as a "state".

### (13) Coordinator (Coordinator)

The coordinator is used to ensure atomicity of a cross-shard transaction. Each transaction may have different coordinators according to coordinator selection rules. In addition, a blockchain service node may serve as the coordinator, or an independent node may serve as the coordinator. For example, the coordinator may also be referred to as a "coordinator node".

### (14) Deadlock processor (Resolver)

The deadlock processor is configured to detect and handle a deadlock between cross-shard transactions. Usually, a primary (Master) node in a shard may serve as the deadlock processor. Certainly, another node may alternatively serve as the deadlock processor. For example, the deadlock processor may also be referred to as a "deadlock resolution node".

### (15) Transaction in the blockchain

The transaction in the blockchain may be a task unit executed in the blockchain and recorded in the blockchain. The transaction usually includes a sending (From) field, a receiving (To) field, and a data (Data) field. When the transaction is a transfer transaction, the from field indicates an account address that initiates the transaction (that is, initiates a transfer task to another account), the to field indicates an account address that receives the transaction (that is, receives a transfer), and the data field includes a transfer amount.

The following describes technical solutions provided in this application.

Currently, a very important factor that limits large-scale application of a blockchain technology is performance, that is, throughput. The throughput is usually measured by transactions per second (transactions per second, TPS). Developers have proposed a variety of solutions to try to improve block throughput, and this process is referred to as "scaling". From a perspective of technologies used by scaling, scaling may be classified as on-chain scaling and off-chain scaling. On-chain scaling usually includes block expansion, segregated witness, sharding, and consensus layer improvement solutions. Off-chain scaling usually includes state channel, sidechain, and off-chain computation solutions.

A sharding technology is an on-chain scaling solution. A concept of sharding originates from the database field, and sharding originally refers to horizontal partitioning of data in a database (dividing different rows of a table into different partitions). Each shard is stored on an independent database server instance to distribute loads. A basic idea of blockchain sharding is to classify nodes in a blockchain network into several independent subnets. Each subnet includes some nodes, and one subnet is one shard (shard). A single shard may process a transaction of the shard, and even store only some network states. A plurality of shards process transactions in parallel. Theoretically, throughput of the entire blockchain network is improved.

Sharding technologies may be classified into network sharding, transaction sharding, and state sharding according to different sharding mechanisms. Network sharding is a common sharding mode. For example, the entire blockchain network is divided into a plurality of subnets, that is, a plurality of shards. Transaction sharding is to allocate transactions to different shards according to a specific rule. Transaction sharding is to allocate transactions to a same shard for processing according to a specific rule. State sharding is to divide an entire storage region, so that different shards store different parts. Each node is responsible for storing only shard data of the node, instead of storing a complete blockchain state. State sharding can resolve a storage capability bottleneck problem. State sharding may be used to distribute data in a blockchain to a plurality of nodes. Each node only needs to assist shard data of a memory shard, which improves a storage capability of the entire blockchain network. In addition, different shards may process respective shard data in parallel, which improves a processing speed and concurrency performance of the data. Therefore, state sharding may be used to expand both the storage capability and the throughput of the blockchain network.

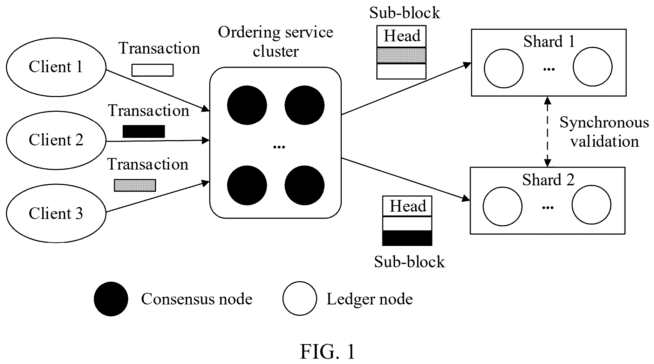

For example, FIG. 1 is a diagram of an architecture of extending a blockchain network through state sharding according to an embodiment of this application. As shown in FIG. 1, the blockchain network may include an ordering service cluster and two shards. Certainly, the blockchain network may alternatively be divided into three or more shards. This is not limited herein. The ordering service cluster mainly includes consensus nodes, and may also be referred to as a "consensus cluster". Each shard includes at least one ledger node, and different keys are stored in different shards. One key is stored only on one shard. In FIG. 1, three different clients commit transactions to the ordering service cluster. The ordering service cluster may execute these transactions and/or order these transactions, and package these transactions into blocks. When packaging the blocks, the ordering service cluster may classify the transactions involving different shards into different sub-blocks based on the shards involving the transactions, and then send the corresponding sub-blocks to the corresponding shards. When a transaction involves a plurality of shards, the transaction is packaged into different sub-blocks, and the sub-blocks are sent to the corresponding shards. For example, a transaction committed by a client 1 in FIG. 1 involves both a shard 1 and a shard 2. Therefore, the transaction is packaged into two blocks, and the two blocks are sent to the shard 1 and the shard 2. In addition, when a transaction involves a plurality of shards, different shards may synchronously validate the transaction, in other words, perform cross-shard transaction validation. For example, when a key included in a transaction is stored in a shard, it may be considered that the transaction involves the shard. Although this sharding architecture can expand a storage capability of the blockchain network, the sharding architecture uses a global ordering consensus, in other words, all transactions are ordered by using one ordering service cluster. As a result, an ordering service cannot be expanded, and ordering service performance has an upper limit. Consequently, performance of the blockchain has a bottleneck due to this shortcoming.

In view of this, an embodiment of this application provides a blockchain. The blockchain includes a plurality of shards, and each shard has one ordering service cluster (in other words, each shard includes one consensus cluster) and at least one ledger node. When committing a transaction, a client may commit the transaction to any shard, and different shards process only transactions involving the shards. When a transaction obtained by a shard does not involve the shard, the shard may forward the transaction to a shard involving the transaction, so that specific transactions can be ordered and processed by using ordering service clusters in specific shards. In the blockchain, each shard has an independent ordering service cluster (in other words, has an independent consensus cluster). Therefore, ordering service performance of each shard can be theoretically horizontally scaled without limit.

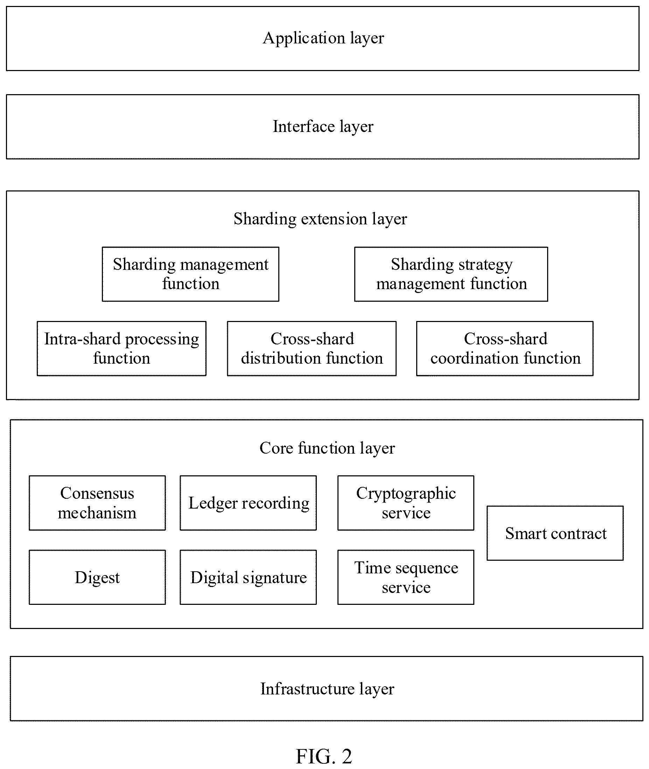

For example, FIG. 2 is a diagram of a system architecture of a blockchain according to an embodiment of this application. As shown in FIG. 2, the system architecture of the blockchain mainly includes an application layer, an interface layer, a sharding extension layer, a core function layer, and an infrastructure layer.

The application layer mainly refers to an application, a service, or the like built on blockchain infrastructure. The application layer may use a smart contract function to implement automatic service logic and contract execution.

The interface layer is mainly used to provide an interface for a user to interact with the blockchain, process data, and perform a service operation.

The sharding extension layer is mainly used to provide a service of sharding the blockchain, to implement scalability of the blockchain. For example, services provided by the sharding extension layer may include a sharding strategy management function, a sharding management function, a cross-shard distribution function, an intra-shard processing function, and a cross-shard coordination function.

The sharding strategy management function is mainly responsible for providing a sharding method for the user to predefine and manage a mapping relationship between a key (key) included in a transaction and a shard. The sharding strategy management function may provide the following methods: (a) a method that is enabled by default, in which a key in a transaction may be used as an input to generate a hash value, and the hash value is used to allocate each transaction to a shard corresponding to the key in the transaction for processing; and (b) a customized method, which allows a manager to flexibly predefine a mapping relationship between a key in a transaction and a shard based on specific transaction logic. Based on the predefined mapping relationship between the key and the shard, the transaction may be allocated to the shard corresponding to the key in the transaction for processing. For example, the blockchain manager may obtain the shards through division by using the sharding strategy management function and code edited by the blockchain manager. In this embodiment, the shards in the blockchain may be but are not limited to being obtained through division according to a user-configured sharding strategy.

The shard management function is mainly responsible for providing capabilities such as shard creation, shard deployment, and shard deletion. For the provided shard creation capability, the sharding management function may provide capabilities of configuring a number of shards that need to be created, a number of nodes included in the shard, and the like. For the provided shard deployment capability, the shard management function may provide capabilities of configuring and initializing a peer-to-peer network, a consensus mechanism, a storage service, a smart contract, a contract execution environment, and the like for each shard. For the provided shard deletion capability, the sharding management function may provide capabilities of deleting a shard, migrating data across shards, reclaiming a resource, and performing other operations. In other words, the sharding management function may manage a node in a shard, scale in or out the shard, and the like.

The cross-shard distribution function is mainly responsible for providing cross-shard data exchange, transaction distribution, and data validation and exchange capabilities. The provided data exchange capability is a provided capability of obtaining state data required by a transaction across shards in an endorsement phase. The provided transaction distribution capability is a provided capability of distributing a transaction to a corresponding shard for processing in a consensus phase. The provided data validation and exchange capability is a provided capability of obtaining a state data validation record across shards in a validation phase.

The intra-shard processing function is mainly responsible for intra-shard transaction execution, a block consensus, data validation, data synchronization, and data storage.

The cross-shard coordination function is mainly responsible for providing a cross-shard transaction validation capability. After the blockchain is divided into shards, cross-shard transaction validation needs to be considered between shards. A coordination mechanism needs to be provided between participating shards, to help complete atomic transaction commit or rollback, so as to ensure data consistency. Therefore, the cross-shard coordination function needs to provide the following capabilities: (a) decentralized coordinator; and (b) atomic commit protocol. For the decentralized coordinator, in a distributed ledger technology, especially in a consortium blockchain, different from a traditional distributed transaction processing system, a group of centralized coordinators cannot be deployed to represent all participants to process cross-shard transaction coordination. Due to a cross-organizational trust issue, each participant needs to have its own coordinator to help complete transaction coordination. Therefore, each participant may deploy a dedicated coordinator for all shards, or may temporarily select a node from the shard as a coordinator during a cross-shard transaction. For the atomic commit protocol, to maintain atomicity and consistency of state data involving a cross-shard transaction, the coordination mechanism requires an atomic commit protocol to ensure that the cross-shard transaction is completely committed or rolled back. For example, a two-phase commit protocol is an atomic commit protocol, is applicable to various user scenarios, and may be used when many systems are temporarily faulty.

The core function layer is mainly used to provide core services of the blockchain. For example, the core services may include a consensus mechanism service, a ledger recording service, a cryptographic service, a smart contract service, a digest service, a digital signature service, and a time sequence service.

The infrastructure layer is mainly used to provide a resource environment required for running the blockchain.

The following describes a structure of the blockchain provided in embodiments of this application based on the system architecture of the blockchain shown in FIG. 2.

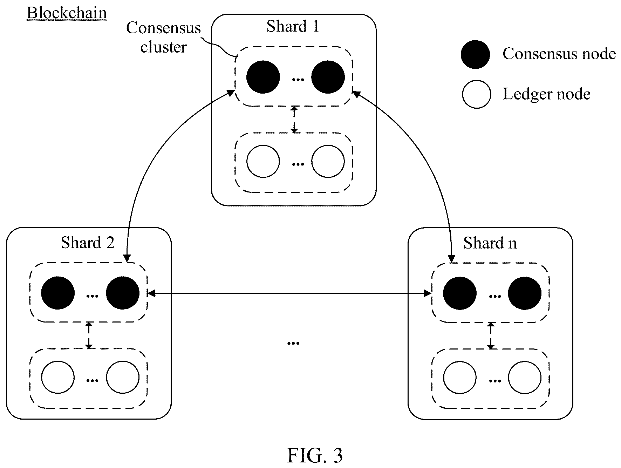

For example, FIG. 3 is a diagram of a structure of a blockchain according to an embodiment of this application. As shown in FIG. 3, the blockchain may include a plurality of consensus clusters and a plurality of ledger nodes, and a blockchain network is divided into a plurality of shards. Different keys are stored in different shards, and one key is stored in only one shard. For example, a key 1 may be stored in a shard 1, a key 2 may be stored in a shard 2, and a key n may be stored in a shard n. Each consensus cluster includes a plurality of consensus nodes. Different consensus clusters are deployed in different shards, in other words, each shard has an independent consensus cluster. In addition, each shard has at least one ledger node. In other words, each shard has a capability of independently processing a transaction. The consensus cluster in the shard may be responsible for packaging a transaction into a block and sending the block to the ledger node in the shard when a key included in the transaction committed by a client is stored in the shard; and forwarding the transaction to a shard that stores the key included in the transaction when the key included in the transaction committed by the client is not stored in the shard, for example, forwarding the transaction to a consensus cluster in another shard. For example, if the key 1 is stored in the shard 1, and the key 2 is stored in the shard 2, when the client commits the transaction to the shard 1, and the transaction includes only the key 1, a consensus cluster in the shard 1 may package the transaction into a block, and forward the block to a ledger node in the shard 1; or when the client commits the transaction to the shard 1, and the transaction includes only the key 2, a consensus cluster in the shard 1 may forward the transaction to the shard 2; or when the client commits the transaction to the shard 1, and the transaction includes only the key 1 and 2, a consensus cluster in the shard 1 may package the transaction into a block, forward the block to a ledger node in the shard 1, and forward the transaction to the shard 2. After receiving the block sent by the consensus cluster in the shard, the ledger node in the shard may process the transaction in the block, for example, validate the transaction in the block, or update state data in the shard. For example, the shards in the blockchain may be obtained through division based on code edited by a blockchain manager. For example, in this embodiment, "forwarding the transaction" or "distributing the transaction" may be understood as, but is not limited to, "sending the transaction". In addition, "packaging the transaction into the block" may be understood as, but is not limited to, "generating the block that includes the transaction".

In FIG. 3, in a shard, different nodes may, but are not limited to, interacting and communicating with each other through peer-to-peer (peer-to-peer, P2P) communication. Between different shards, primary (master) nodes in the shards may also interact with and communicate with each other through P2P communication, to implement cross-shard interaction and communication. A node in each shard may be any apparatus, server, device cluster, or the like with computing and processing capabilities. Nodes in a shard may generate a same state in the shard by executing a same transaction, and may store a same state database. Nodes in different shards may generate different states in the corresponding shards by executing different transactions, and may store different state databases.

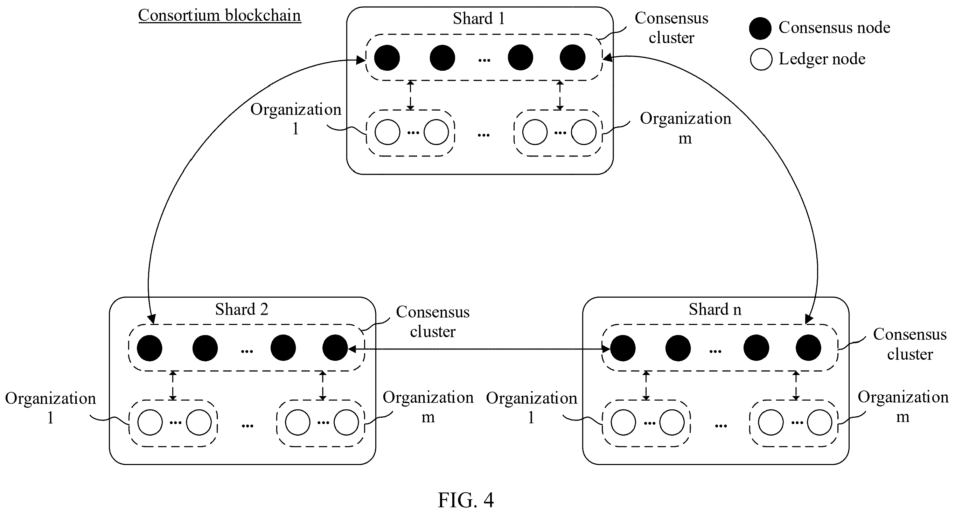

For example, FIG. 4 is a diagram of a structure of another blockchain according to an embodiment of this application. In FIG. 4, the blockchain is a consortium blockchain. As shown in FIG. 4, the consortium blockchain is also divided into a plurality of shards, different keys are stored in different shards, and one key is stored in only one shard. Each shard has an independent consensus cluster. In addition, each shard includes ledger nodes that belong to a plurality of different organizations. In other words, each shard has a capability of independently processing a transaction. In the consortium blockchain, a consensus cluster in a shard may distribute a block packaged by the consensus cluster to a ledger node that is in each organization and that is included in the shard. Similar to the blockchain shown in FIG. 3, in the consortium blockchain shown in FIG. 4, the consensus cluster in the shard may be responsible for packaging a transaction into a block and sending the block to the ledger node in the shard when a key included in the transaction committed by a client is stored in the shard; and forwarding the transaction to a shard that stores the key included in the transaction when the key included in the transaction committed by the client is not stored in the shard, for example, forwarding the transaction to a consensus cluster in another shard.

To help understand the structures of the blockchains shown in FIG. 3 and FIG. 4, the following uses working processes of the blockchains under an "execute-order-validate (execute-order-validate, EOV)" architecture as examples for description. It should be understood that for working processes of the blockchain under other architectures (for example, an "OV architecture"), refer to the working process of the blockchain under the EOV architecture described herein. Details are not described herein again.

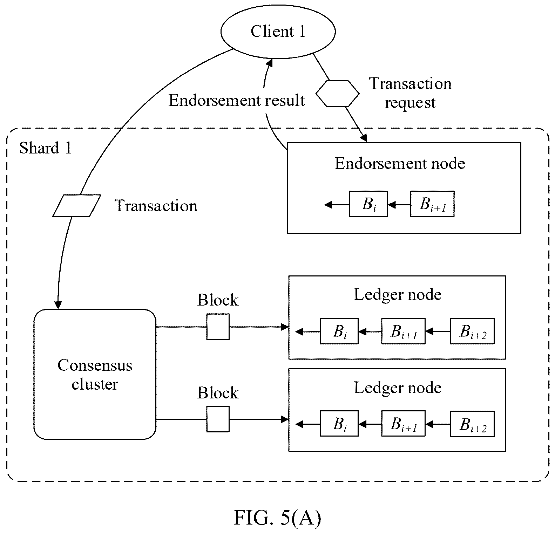

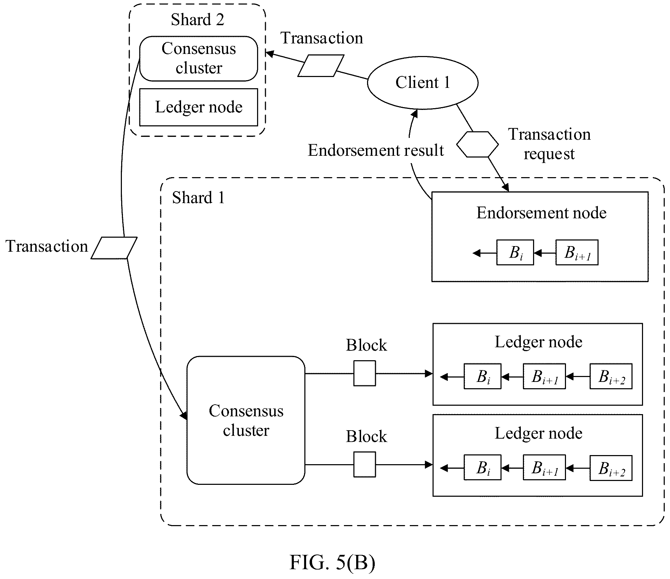

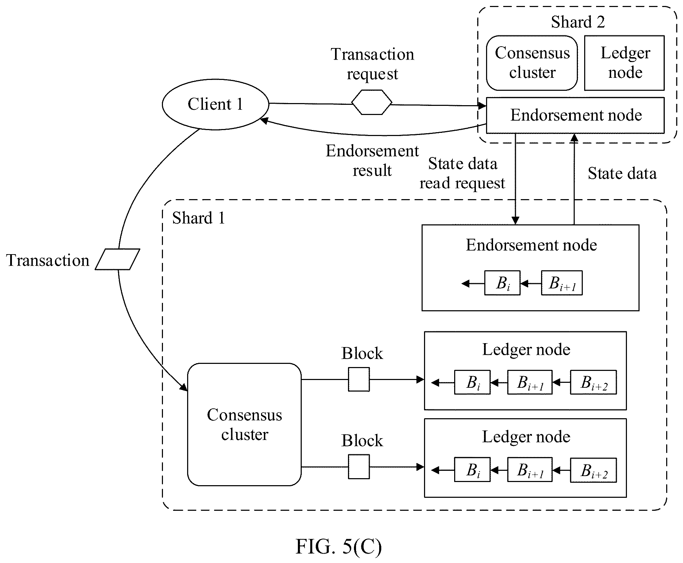

For example, FIG. 5 is a diagram of a working process of a blockchain according to an embodiment of this application. In FIG. 5, a key 1 of a user corresponding to a client 1 is stored in a shard 1, and a transaction initiated by the client 1 does not involve another shard (in other words, the transaction does not include a key other than the key 1), for example, a proof-of-existence transaction. As shown in FIG. 5(A), the client 1 may initiate a transaction request to an endorsement node in the blockchain. The transaction request may represent an update request for the key 1. Because the transaction request is used to update only the key 1, a transaction corresponding to the transaction request does not involve another shard. Therefore, the endorsement node may read state data in the shard 1, and pre-execute an update operation on the key 1, to generate a transaction read-write set. In other words, the endorsement node may generate the transaction read-write set based on the state data in the shard 1. Both a read set and a write set of the transaction read-write set include the key 1. Then, the endorsement node may sign the transaction read-write set generated by the endorsement node, and send a signed transaction read-write set to the client 1. For example, the signed transaction read-write set may also be referred to as an "endorsement result". The endorsement result includes the key 1. Then, the client 1 may package the endorsement result returned by the endorsement node into the transaction, and send the transaction to the shard 1. In other words, before a transaction is sent to a shard, a node in the blockchain may read state data in the shard that receives the transaction, to endorse the transaction, thereby ensuring execution of the transaction. Then, the shard 1 may obtain the transaction. Then, a consensus cluster in the shard 1 may parse the transaction to learn that the transaction includes only the key 1. The transaction does not include another key. Therefore, the consensus cluster in the shard 1 does not need to forward the transaction. In this case, the consensus cluster in the shard 1 may package the transaction into a block, and distribute the block to a ledger node in the shard 1. After obtaining the block, the ledger node in the shard 1 may validate the transaction in the block. The validation includes: first, validating a signature and an endorsement strategy of the block and the transaction; after the validation succeeds, validating whether a version of the key 1 in the read set in the transaction read-write set in the transaction is consistent with a version of the key 1 stored in the shard 1; and if the versions are consistent, determining that the transaction is valid; or if the versions are inconsistent, determining that the transaction is invalid. Then, the ledger node commits the transaction that passes the validation. To be specific, when the transaction is determined to be valid, the ledger node updates the state data in the shard based on the write set in the transaction read-write set of the transaction; or when the transaction is determined to be invalid, the ledger node does not update the state data in the shard based on the write set in the transaction read-write set in the transaction, but may record the invalid transaction in respective databases of ledger nodes in all shards. In addition, the ledger node may store the block in the blockchain associated with the shard 1. In this case, a new block *B*_{*i*+2} is added to the blockchain. For example, when it is determined that the transaction is valid, a value of the key 1 in the state data in the shard 1 may be updated to a value in the write set, and the version of the key 1 is updated. For example, if the non-updated version of the key 1 is 1, the updated version of the key 1 may be 2. For example, in FIG. 5(A), when the blockchain is a consortium blockchain, the endorsement node communicating with the client 1 may belong to an organization to which the client 1 that initiates a transaction proposal belongs. In addition, the endorsement node communicating with the client 1 may be allocated to the shard 1, or may be allocated to another shard. This is not limited herein. In some embodiments, an action executed by a node in a shard may be understood as an action executed by the shard. For example, that a ledger node in a shard validates a transaction in a block may be understood as that the shard validates the transaction in the block. In some embodiments, the shard 1 may be referred to as a first shard, a shard 2 may be referred to as a second shard, the key 1 may be referred to as a first key, and a key 2 may be referred to as a second key.

In addition, as shown in FIG. 5(B), the client 1 may alternatively send, to another shard, for example, the shard 2, the transaction packaged based on the endorsement result returned by the endorsement node. Then, a consensus cluster in the shard 2 may analyze the transaction to learn that the transaction includes only the key 1. Therefore, the shard 2 may forward the transaction to the shard 1, and the shard 2 may not process the transaction. Finally, the transaction can be processed in the shard 1. For details, refer to the descriptions in FIG. 5(A). Details are not described herein again. In some embodiments, when an OV architecture is used, the client 1 directly initiates the transaction to the shard, instead of initiating the transaction proposal to the endorsement node. In this case, the consensus cluster in the shard may analyze the transaction according to a sharding rule, to determine the shard that the transaction involves, and determine whether to execute the transaction or forward the transaction to another shard. In some embodiments, the endorsement node described in FIG. 5 may be a node in the shard 1, or may be a node in the another shard. This is not limited herein.

In addition, as shown in FIG. 5(C), the client 1 may alternatively send the transaction request to another shard, for example, the shard 2. The transaction request may represent the update request for the key 1. Then, an endorsement node in the shard 2 may read the state data in the shard 1 from the shard 1 across shards, and pre-execute an update operation on the key 1, to generate a transaction read-write set. Both a read set and a write set of the transaction read-write set include the key 1. Then, the shard 2 may sign the transaction read-write set generated by the shard 2, and send a signed transaction read-write set, in other words, send an endorsement result, to the client 1. Then, the client 1 may package the endorsement result returned by the shard 2 into the transaction and send the transaction to the shard 1. Finally, the transaction can be processed in the shard 1. For details, refer to the descriptions in FIG. 5(A). Details are not described herein again.

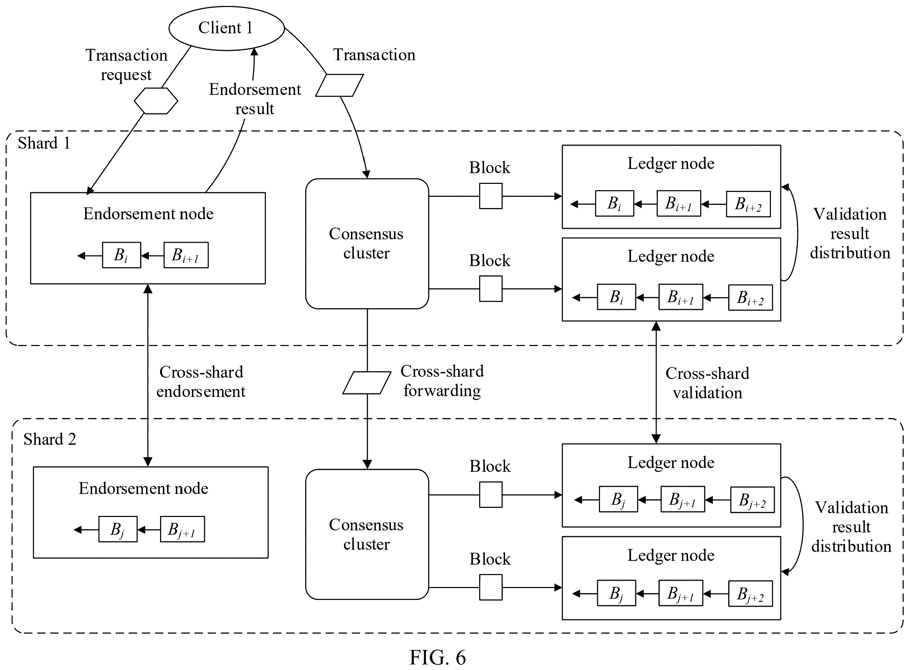

For example, FIG. 6 is a diagram of a working process of another blockchain according to an embodiment of this application. In FIG. 6, different keys are stored in different shards, a key 1 of a user A corresponding to a client 1 is stored in a shard 1, and a key 2 of a user B is stored in a shard 2. A transaction initiated by the client 1 includes the key 1 and the key 2, for example, a transfer transaction. As shown in FIG. 6, when the user A makes a transfer to the user B, the client 1 may initiate a transaction request to an endorsement node in the shard 1 (certainly, which may alternatively be an endorsement node in another shard). The transaction request may represent an update request for the key 1 and the key 2. After obtaining the transaction request, the endorsement node in the shard 1 may parse the transaction request to learn that operations need to be performed on the key 1 and the key 2. In this case, the endorsement node may separately read state data in the shard 1 and state data in the shard 2, and pre-execute update operations on the key 1 and the key 2, to generate a transaction read-write set. In other words, the endorsement node may generate the transaction read-write set based on the state data in the shard 1 and the state data in the shard 2. Both a read set and a write set of the transaction read-write set include the key 1 and the key 2. When reading the state data in the shard 2, the endorsement node in the shard 1 may, but is not limited to, communicating with an endorsement node in the shard 2, to read the state data in the shard 2. Then, the endorsement node in the shard 1 may sign the transaction read-write set generated by the endorsement node, and send a signed transaction read-write set to the client 1. For example, the signed transaction read-write set may also be referred to as an "endorsement result". The endorsement result includes the key 1 and the key 2. Then, the client 1 may package the endorsement result returned by the endorsement node into a transaction and send the transaction to the shard 1. Then, the shard 1 may obtain the transaction. Then, a consensus cluster in the shard 1 analyzes the transaction, and may learn that the transaction includes the key 1 and the key 2. Then, the consensus cluster in the shard 1 may forward the transaction to the shard 2. At the same time, the consensus cluster in the shard 1 may package the transaction into a block. Then, the consensus cluster in the shard 1 may distribute the block generated by the consensus cluster to a ledger node in the shard 1. The shard 2 may receive the transaction forwarded from the shard 1, and a consensus cluster in the shard 2 may package the transaction into a block. Then, the consensus cluster in the shard 2 may distribute the block generated by the consensus cluster to a ledger node in the shard 2. It should be understood that, in FIG. 6, when sending the transaction, the client 1 may alternatively send the transaction to a shard other than the shard 1. Then, the shard other than the shard 1 forwards the transaction to the shard 1 and/or the shard 2. For details, refer to the descriptions of (B) in FIG. 4. Details are not described herein again. It should be noted that, before the shard 1 sends the transaction to the shard 2, a node (that is, the endorsement node) in the blockchain needs to first read the state data in the shard 1 and the state data in the shard 2, to endorse the transaction, thereby ensuring execution of the transaction. After reading the state data in the shard 1 and the state data in the shard 2, the node (that is, the endorsement node) in the blockchain may generate the endorsement result based on the read state data. The endorsement result includes the key 1 and the key 2.

After obtaining the new blocks, both the ledger nodes in the shard 1 and the shard 2 may validate the transaction in the new blocks respectively obtained by the ledger nodes. The validation includes: first validating a signature and an endorsement strategy of the block and the transaction; after the validation succeeds, validating whether a version of the key 1 included in the transaction is consistent with a version of the key 1 stored in the shard 1 and whether a version of the key 2 is consistent with a version of the key 2 stored in the shard 2. The transfer transaction includes the key 1 and the key 2. Therefore, when validating the transaction, the ledger nodes in the shard 1 and shard 2 need to perform cross-shard validation to ensure atomicity of the transaction, in other words, ensure consistency and integrity of the transaction. In other words, when the transaction includes the key 1 and the key 2, the shard 1 and the shard 2 need to collaboratively validate the transaction.

When the shard 1 and the shard 2 collaboratively validate the transaction, if a structure of the blockchain is the structure shown in FIG. 3, the shard 1 and the shard 2 may collaboratively validate the cross-shard transaction according to a two-phase commit protocol (two-phase commit protocol, 2PC). Specifically, a ledger node (for example, a primary node) in the shard 1 may send a result of validating the key 1 by the ledger node in the shard 1 to a coordinator node, and a ledger node in the shard 2 may send a result of validating the key 2 by the ledger node in the shard 2 to the coordinator node. In other words, the shard 1 may send a result of validating the key 1 by the shard 1 to the coordinator node, and the shard 2 may send a result of validating the key 2 by the shard 2 to the coordinator node. For example, a result of validating a key in a transaction by a shard may be understood as a validation result of the shard for the transaction. The coordinator node may be but is not limited to a node in the blockchain. For example, the coordinator node may be a node in the shard 1 or the shard 2, or may be a node in another shard. This is not limited herein. Then, the coordinator node may obtain the validation results sent by the shard 1 and the shard 2, and then may determine whether the transaction is valid. Specifically, the coordinator node may summarize the two validation results and validate the two validation results. If the validation result of the key 1 indicates that the version of the key 1 included in the transaction is consistent with the version of the key 1 stored in the shard 1, and the validation result of the key 2 indicates that the version of the key 2 included in the transaction is consistent with the version of the key 2 stored in the shard 2, the coordinator node may consider that the transaction is valid, and separately send a validation result representing that the transaction is valid to the ledger nodes in the shard 1 and shard 2, in other words, send the validation result to the shard 1 and the shard 2. If the validation result of the key 1 indicates that the version of the key 1 included in the transaction is inconsistent with the version of the key 1 stored in the shard 1, and/or the validation result of the key 2 indicates that the version of the key 2 included in the transaction is inconsistent with the version of the key 2 stored in the shard 2, the coordinator node may consider that the transaction is invalid, and separately send a validation result representing that the transaction is invalid to the ledger nodes in the shard 1 and shard 2, in other words, send the validation result to the shard 1 and the shard 2. After obtaining the validation result returned by the coordinator node, the ledger node in the shard 1 may synchronize the validation result to another ledger node in the shard 1. Then, the ledger node in the shard 1 may commit a valid transaction. To be specific, if determining that the transaction is valid, the ledger node updates the state data in the shard based on the write set in the transaction read-write set of the transaction; or if determining that the transaction is invalid, the ledger node does not update the state data in the shard based on the transaction read-write set in the transaction, but may record the invalid transaction in respective databases of ledger nodes in all shards. In addition, the ledger node may store the block in the blockchain. In this case, a new block *B*_{*i*+2} is added to the blockchain . For example, when determining that the transaction is valid, the ledger node in the shard 1 may update a value of the key 1 in the state data in the shard 1 to a value of the key 1 in the write set, update the version of the key 1, update a value of the key 2 in the state data in the shard 1 to a value of the key 2 in the write set, and update the version of the key 2. Similarly, after obtaining the validation result returned by the coordinator node, the ledger node in the shard 2 may also synchronize the validation result to another ledger node in the shard 2. Then, the ledger node in the shard 2 may commit a valid transaction. To be specific, if determining that the transaction is valid, the ledger node updates the state data in the shard based on the write set in the transaction read-write set of the transaction; or if determining that the transaction is invalid, the ledger node does not update the state data in the shard based on the transaction read-write set in the transaction, but may record the invalid transaction in respective databases of ledger nodes in all shards. In addition, the ledger node may store the block in the blockchain. In this case, a new block *B*_{*j*+2} is added to the blockchain . For example, when determining that the transaction is valid, the ledger node in the shard 2 may update a value of the key 1 in the state data in the shard 2 to a value of the key 1 in the write set, update the version of the key 1, update a value of the key 2 in the state data in the shard 2 to a value of the key 2 in the write set, and update the version of the key 2. In some embodiments, the coordinator node may alternatively be a node in the shard 1 or the shard 2. When the coordinator node is a node in the shard 1, because the node in the shard 1 can learn of a result of validating the key 1 by the node in the shard 1, the node in the shard 1 does not need to send data to the coordinator node, and the coordinator node does not need to return the validation result to the node in the shard 1. It should be understood that, in this embodiment, that a plurality of shards collaboratively validate a transaction means that all the plurality of shards participate in validation of the transaction. In addition, in a multi-shard collaborative validation process, status of the plurality of shards may be equal or unequal. When the status of the plurality of shards is unequal, a shard may dominate a collaboration process. For example, the shard 1 may dominate the collaboration process, and may indicate or control the shard 2.

When the shard 1 and the shard 2 collaboratively validate the transaction, if the structure of the blockchain is the structure shown in FIG. 4, because trust between nodes of different organizations in the consortium blockchain is difficult to be ensured, if cross-shard transaction validation is performed according to the 2PC in this case, it is difficult to determine which organization takes on the role of coordinator. That is, there is a cross-organization trust issue. Therefore, use of the 2PC in the consortium blockchain has a limitation. In addition, in a consortium blockchain scenario, a coordination chain may be introduced to resolve a cross-shard transaction atomicity problem. The coordination chain is trusted by all organizations in the consortium blockchain. Although this manner can implement inter-shard coordination in the consortium blockchain scenario, this manner introduces a new coordination chain, which additionally increases resource overheads. In view of this, an embodiment of this application provides another solution for resolving the cross-shard transaction atomicity problem in the consortium blockchain. In the solution, cross-shard transaction validation is mainly performed in each organization in the consortium blockchain, each organization has a coordinator node, and cross-shard transaction validation can be performed in the organization by using a coordinator node in the organization. This overcomes the cross-organization trust issue. The coordinator node of each organization may be a node in a shard that participates in cross-shard transaction validation, or may be a node in another shard, or may be a third-party node. This is not limited herein.

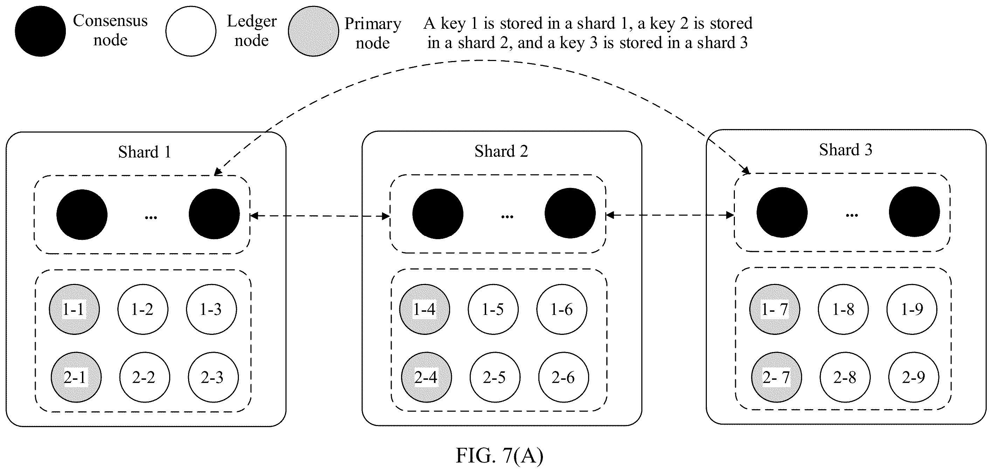

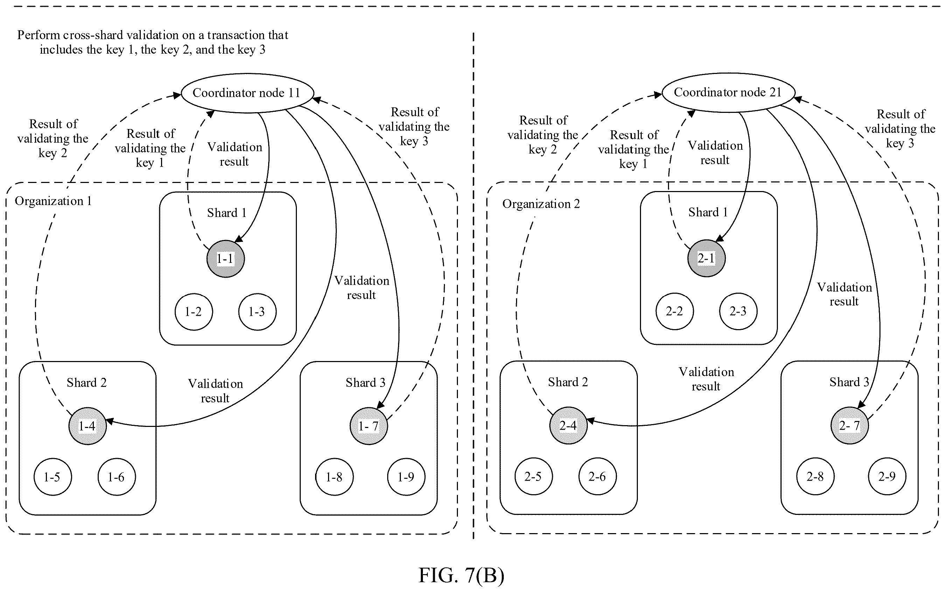

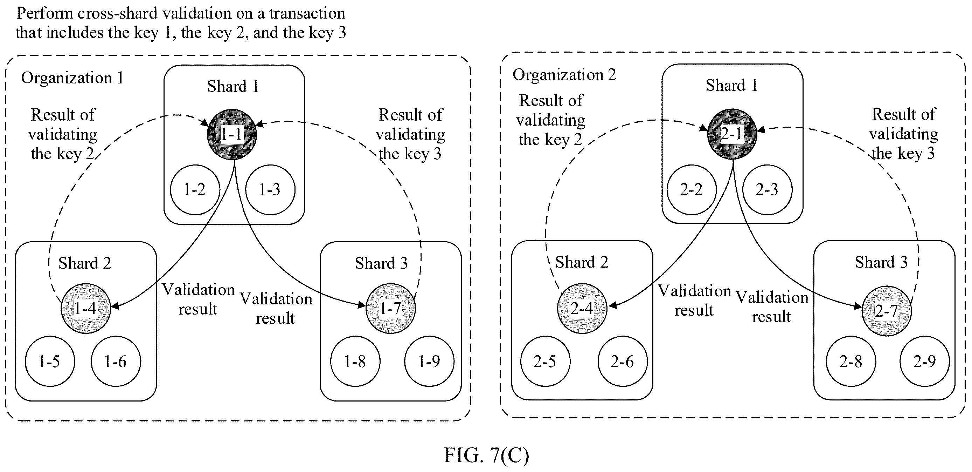

Specifically, when the structure of the blockchain is the structure shown in FIG. 4, in any shard in the consortium blockchain, each organization has one primary node. For example, refer to FIG. 7(A). In FIG. 7(A), a key 1 is stored in a shard 1, a key 2 is stored in a shard 2, a key 3 is stored in a shard 3, nodes 1-1 to 1-9 belong to an organization 1, and nodes 2-1 to 2-9 belong to an organization 2. In addition, the node 1-1 in the shard 1 is a primary node, and the node 2-1 is also a primary node; the node 1-4 in the shard 2 is a primary node, and the node 2-4 is also a primary node; and the node 1-7 in the shard 3 is a primary node, and the node 2-7 is also a primary node. Further, when cross-shard transaction validation needs to be performed, nodes in a same organization and in different shards may perform cross-shard transaction validation by using a coordinator node in the organization in which the nodes are located. In this way, a cross-organization trust issue is overcome. Specifically, continue to refer to FIG. 7. In FIG. 7(B), when a transaction includes the key 1, the key 2, and the key 3, the primary node 1-1 in the shard 1 may send a result of validating the key 1 by the primary node 1-1 to a coordinator node 11 in the organization 1, the primary node 1-4 in the shard 2 may send a result of validating the key 1 by the primary node 1-4 to the coordinator node 11 in the organization 1, and the primary node 1-7 in the shard 3 may also send a result of validating the key 1 by the primary node 1-7 to the coordinator node 11 in the organization 1. The coordinator node 11 may summarize the validation results sent by the shard 1, the shard 2, and the shard 3, and validate the three validation results to obtain a validation result. The validation result may represent whether the transaction is valid. Then, the coordinator node 11 may separately return the validation result to the primary node 1-1 in the shard 1, the primary node 1-4 in the shard 2, and the primary node 1-7 in the shard 3. In this way, cross-shard transaction validation is completed in the organization 1. After obtaining the validation result, the primary node in the shard may synchronize the validation result to another node that belongs to the organization 1 and that is in the shard.

Similarly, the primary node 2-1 in the shard 1 may send a result of validating the key 1 by the primary node 2-1 to a coordinator node 21 in the organization 2, the primary node 2-4 in the shard 2 may send a result of validating the key 1 by the primary node 2-4 to the coordinator node 21 in the organization 2, and the primary node 2-7 in the shard 3 may also send a result of validating the key 1 by the primary node 2-7 to the coordinator node 21 in the organization 2. The coordinator node 21 may summarize the validation results sent by the shard 1, the shard 2, and the shard 3, and validate the three validation results to obtain a validation result. The validation result may represent whether the transaction is valid. Then, the coordinator node 21 may separately return the validation result to the primary node 2-1 in the shard 1, the primary node 2-4 in the shard 2, and the primary node 2-7 in the shard 3. In this way, cross-shard transaction validation is completed in the organization 2. After obtaining the validation result, the primary node in the shard may synchronize the validation result to another node that belongs to the organization 2 and that is in the shard.

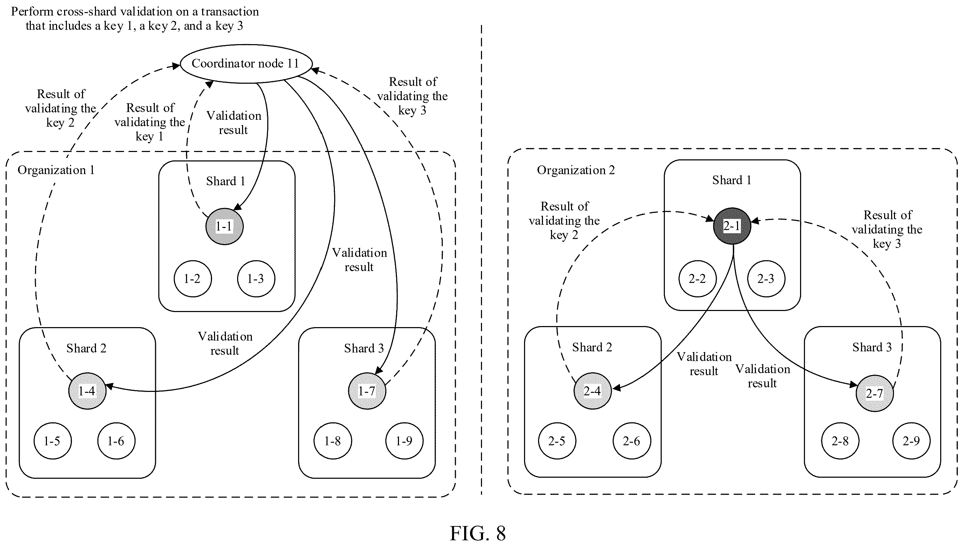

It should be noted that the coordinator node in FIG. 7(B) is a node independent of the shard 1, the shard 2, and the shard 3, for example, a node in another shard or a node of a third party. In some embodiments, the coordinator node may alternatively be a node that is in a shard and that participates in cross-shard transaction validation in the shard. In this case, during cross-shard transaction validation, the shard in which the coordinator node is located may not need to send a result of validating the key by the shard to the coordinator node, and the coordinator node does not need to send the validation result to the shard in which the coordinator node is located. For example, continue to refer to FIG. 7. As shown in FIG. 7(C), in this case, the node 1-1 in the shard 1 is a coordinator node in the organization 1, and the node 2-1 in the shard 1 is a coordinator node in the organization 2. In FIG. 7(C), when cross-shard validation is performed on a transaction including the key 1, the key 2, and the key 3, the primary node 1-4 in the shard 2 may send the result of validating the key 1 by the primary node 1-4 to the node 1-1 in the shard 1, and the primary node 1-7 in the shard 3 may also send the result of validating the key 1 by the primary node 1-7 to the node 1-1 in the shard 1. Because the node 1-1 in the shard 1 has already validated the key 1, the node 1-1 may learn of the result of validating the key 1 by the node 1-1. Then, the node 1-1 in the shard 1 may summarize the validation result of validating the key 1 by the node 1-1 and the validation results sent by the shard 2 and the shard 3, and validate the three validation results to obtain the validation result. The validation result may represent whether the transaction is valid. Then, the node 1-1 in the shard 1 may separately return the validation result to the primary node 1-4 in the shard 2 and the primary node 1-7 in the shard 3. In this way, cross-shard transaction validation is completed in the organization 1. At the same time, the node 1-1 in the shard 1 may synchronize the validation result to another node that belongs to the organization 1 and that is in the shard 1. After obtaining the validation result, the primary node in the shard 2 may synchronize the validation result to another node that belongs to the organization 1 and that is in the shard 2. After obtaining the validation result, the primary node in the shard 3 may synchronize the validation result to another node that belongs to the organization 1 and that is in the shard 3. For a process of performing cross-shard transaction validation in the organization 2, refer to a process of performing cross-shard transaction in the organization 1. Details are not described herein again. In some embodiments, when cross-shard transaction validation is performed, if there are a plurality of participating coordinator nodes, a part of the coordinator nodes may be nodes in a shard other than a shard participating in cross-shard transaction validation, and the other part of the coordinator nodes may be nodes in the shard participating in cross-shard transaction validation. For example, refer to FIG. 8. When cross-shard transaction validation is performed in the organization 1, the coordinator node may be a node independent of the shard 1, the shard 2, and the shard 3. When cross-shard transaction validation is performed in the organization 2, the coordinator node may be the node 2-1 in the shard 1. It should be understood that a validation process shown in FIG. 8 is drawn based on FIG. 7, and may be understood as a cross-shard transaction validation manner obtained by combining FIG. 7(B) and FIG. 7(C). For related descriptions of nodes, a cross-shard transaction validation process, and the like in FIG. 8, refer to the descriptions in FIG. 7. Details are not described herein again. It should be understood that FIG. 7 and FIG. 8 are described by using an example in which one transaction includes three different keys. When one transaction includes two different keys, four different keys, or another quantity of different keys, for a process in which different shards collaboratively validate the transaction, refer to the related descriptions in FIG. 7 and FIG. 8. Details are not described herein again.

In the blockchain described above, each shard independently packages a transaction into a block. When the transaction is packaged into the block, transaction ordering is involved. Therefore, there are many reasons (for example, a forwarding sequence difference between shards, a network delay, and an intra-shard consensus ordering difference) that may cause a sequence of cross-shard transactions to be different in different shards. When cross-shard transaction validation needs to be performed, after a shard completes validating a key in a transaction in the shard, the shard transmits a validation result to a corresponding coordinator node for validation and waits for a validation result returned by the coordinator node. When there are two or more transactions with a dependency relationship (for example, a plurality of transactions involve a same key), if these transactions are ordered differently in different shards, these transactions may wait for validation cyclically in different shards. In this case, a deadlock occurs, and at least one deadlock cycle is generated.

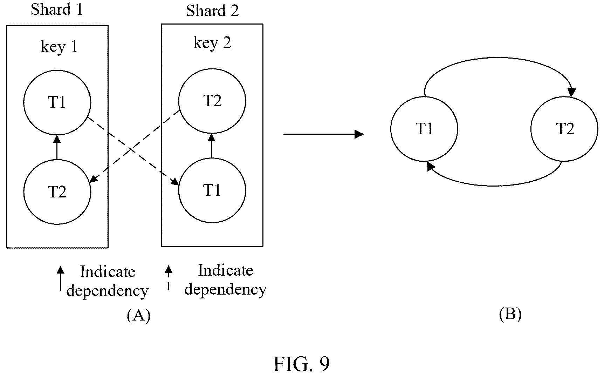

A transfer transaction is used as an example. As shown in (A) in FIG. 9, a key 1 of a user 1 is stored in a shard 1, and a key 2 of a user 2 is stored in a shard 2. If a total amount of a wallet of the user 1 is 120 yuan, the user 1 makes two transfers to the user 2, where the first transfer is 100 yuan (referred to as a transaction T1 below), and the second transfer is 50 yuan (referred to as a transaction T2 below). If the two transactions are ordered on the shard 1 as "the transaction T1 first and the transaction T2 second", and the two transactions are ordered on the shard 2 as "the transaction T2 first and the transaction T1 second", both the transactions T1 and T2 involve an account of the user 1 and an account of the user 2. Therefore, the two transactions have a dependency relationship. On the shard 1, the transaction T2 depends on the transaction T1. On the shard 2, the transaction T1 depends on the transaction T2. Same transactions on different shards also has a dependency relationship based on atomicity of the transactions. In (A) in FIG. 9, after completing validation on the key 1 included in the T1, the shard 1 transmits a validation result to a corresponding coordinator node, and waits for a validation result returned by the coordinator node; and after completing validation on the key 2 included in the T2, the shard 2 transmits a validation result to the corresponding coordinator node, and waits for a validation result returned by the coordinator node. Before obtaining the validation result returned by the coordinator node, the shard 1 cannot validate the key 1 in the transaction T2. Before obtaining the validation result returned by the coordinator node, the shard 2 cannot validate the key 2 in the transaction T1. Then, as shown in (B) in FIG. 9, the shard 1 waits for a validation result of the key 2 in the transaction T1 in the shard 2, and the shard 2 waits for a validation result of the key 1 in the transaction T2 in the shard 1. As a result, the two shards wait for each other cyclically, and a deadlock is formed.

After the deadlock is generated, a cycle (that is, a deadlock cycle) is formed between the transactions having the dependency relationship. The deadlock can be resolved only when the deadlock cycle is opened, for example, a transaction on the deadlock cycle is marked as invalid. The foregoing example in which the user A makes the two transfers to the user B continues to be used, where the first transfer is 100 yuan and the second transfer is 50 yuan. In a process in which the two shards wait for each other (that is, a process in which a plurality of transactions on different shards wait for each other), if one transaction is set to be invalid, the two shards may simultaneously validate a same transaction. In this case, the deadlock is resolved. It should be understood that a blockchain may have at least one deadlock resolution node. The deadlock resolution node may identify a deadlock in the blockchain and resolve the deadlock when the plurality of transactions on different shards in the blockchain wait for each other. When there are a plurality of deadlock resolution nodes, different deadlock resolution nodes may resolve deadlocks according to a same rule, to ensure consistency of deadlock resolution results of the different deadlock resolution nodes.

When the blockchain is a consortium blockchain, if each organization independently resolves a deadlock during deadlock resolution, it may be difficult to ensure that deadlock resolution results in the organizations are consistent, and consequently final state data in the organizations cannot be ensured. In view of this, an embodiment of this application provides a deadlock resolution solution in a case in which a blockchain is a consortium blockchain. In this solution, when a transaction in a shard does not obtain a validation result transmitted by a coordinator node within specific duration, or when a coordinator node does not obtain a result of validating a transaction by a shard within specific duration, a deadlock detection task may be triggered by using a timer or the like. Any node in the consortium blockchain can undertake the deadlock detection task. A node that undertakes the deadlock detection task may be referred to as a "deadlock resolution node". In addition, each organization in the consortium blockchain has at least one deadlock resolution node. For an organization, any node in the organization may serve as a deadlock resolution node. After obtaining the deadlock detection task, a deadlock resolution node may collect transactions in an organization from the organization corresponding to the deadlock resolution node, or collect transaction identifiers or the like, as long as data that can represent the transactions can be collected. This is not limited herein. Then, the deadlock resolution node may construct a dependency graph in a convergent state based on a dependency relationship between the collected transactions. For example, the convergent state may be understood as that the dependency graph reaches a stable state, in other words, no new transaction is added to the dependency graph. The dependency graph is related to a to-be-validated cross-shard transaction. For example, when the transaction T1 needs to be validated across shards, if a coordinator node does not obtain a result of validating the transaction T1 by an organization 1 in a shard within specific duration during validation of the transaction T1, a deadlock resolution node related to the organization 1 in the shard may construct a dependency graph that is related to the transaction T1 and that is in a convergent state. Finally, the deadlock resolution node may delete, from the dependency graph in the convergent state, transactions that cause the deadlock cycle, and mark the transactions as invalid, until all deadlock cycles are eliminated. For example, a node in the dependency graph may be a transaction, or may be a transaction identifier, or may be other data that can represent a transaction. This is not limited herein. In other words, the transaction included in the dependency graph may be a real transaction, or may be a transaction identifier, or may be other data that can represent the transaction. After all the deadlock cycles are eliminated, a validation result transmitted by a corresponding coordinator node can be obtained on a corresponding shard, and a transaction continues to be validated. In this embodiment, to ensure consistency of deadlock resolution results between different organizations, the different organizations may resolve deadlocks according to the same deadlock resolution rule. Because different organizations validate transactions in a same sequence in one shard, wait-for graphs that are constructed by the different organizations and that are in a convergent state should be the same. Therefore, using a same deadlock resolution rule can ensure that a subsequent deadlock resolution result is consistent. In some embodiments, a deadlock resolution operation usually causes a plurality of transactions to fail. In addition, transactions selected each time are different, and therefore revenues are different. Therefore, to maximize the revenue, a transaction that participates in a largest quantity of deadlock cycles may be selected to be marked as invalid each time.

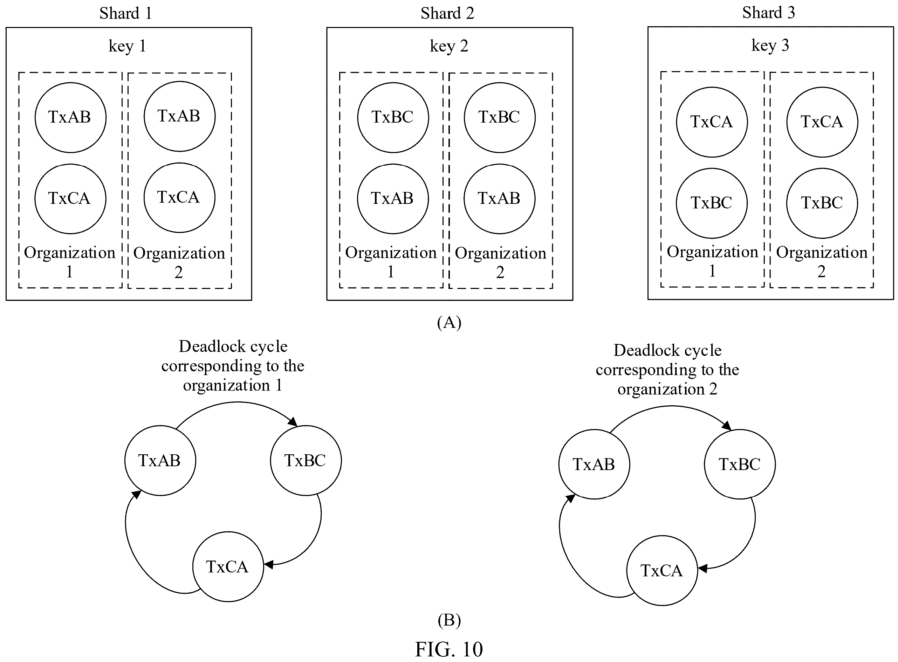

For example, as shown in (A) in FIG. 10, a transfer transaction continues to be used as an example. In addition, a user 1 makes a transfer to a user 2, the user 2 makes a transfer to a user 3, and the user 3 makes a transfer to the user 1. A transaction initiated by the user 1 is TxAB, a transaction initiated by the user 2 is TxBC, and a transaction initiated by the user 3 is TxCA. Shards 1, 2, and 3 each include an organization 1 and an organization 2. It is assumed that a key 1 of the user 1 is stored on the shard 1, a key 2 of the user 2 is stored on the shard 2, and a key 3 of the user 3 is stored on the shard 3. In this case, transactions on the shard 1 include TxAB and TxCA, transactions on the shard 2 include TxAB and TxBC, and transactions on the shard 3 include TxBC and TxCA. A sequence of the transactions in the shard 1 is TxAB first and TxCA second; a sequence of the transactions in the shard 2 is TxBC first and TxAB second; and a sequence of the transactions in the shard 3 is TxCA first and TxBC second. All organizations in a shard need to separately validate each transaction in the shard. In the shard 1, after the organization 1 and the organization 2 separately complete validation of the key 1 in TxAB, the organization 1 sends a validation result to a coordinator node in the organization 1, and the organization 2 sends a validation result to a coordinator node in the organization 2. In this case, both the organization 1 and the organization 2 in the shard 1 wait for the corresponding coordinator nodes to feed back validation results. In the shard 2, after the organization 1 and the organization 2 separately complete validation of the key 2 in TxBC, the organization 1 sends a validation result to the coordinator node in the organization 1, and the organization 2 sends a validation result to the coordinator node in the organization 2. In this case, both the organization 1 and the organization 2 in the shard 2 wait for the corresponding coordinator nodes to feed back validation results. In the shard 3, after the organization 1 and the organization 2 separately complete validation of the key 3 in TxCA, the organization 1 sends a validation result to the coordinator node in the organization 1, and the organization 2 sends a validation result to the coordinator node in the organization 2. In this case, both the organization 1 and the organization 2 in the shard 3 wait for the corresponding coordinator nodes to feed back validation results.

However, in (A) in FIG. 10, the 1^{st} transaction TxAB that needs to be validated cross shards in the organization 1 and the organization 2 on the shard 1 and the 1^{st} transaction TxBC that needs to be validated cross shards in the organization 1 and the organization 2 on the shard 2 involve a same key (that is, the key 2 of the user 2). Therefore, the two transactions have a dependency relationship. Therefore, TxAB validated by each organization on the shard 1 is about to wait for completion of cross-shard transaction validation of TxBC. The 1^{st} transaction TxBC that needs to be validated cross shards in the organization 1 and the organization 2 on the shard 2 and the 1^{st} transaction TxCA that needs to be validated cross shards in the organization 1 and the organization 2 on the shard 3 involve a same key (that is, the key 3 of the user 3). Therefore, the two transactions have a dependency relationship. Therefore, TxBC validated by each organization on the shard 2 is about to wait for completion of cross-shard transaction validation of TxCA. The 1^{st} transaction TxCA that needs to be validated cross shards in the organization 1 and the organization 2 on the shard 3 and the 1^{st} transaction TxAB that needs to be validated cross shards in the organization 1 and the organization 2 on shard 1 involve a same key (that is, the key 1 of the user 1). Therefore, the two transactions have a dependency relationship. Therefore, TxCA validated by each organization on the shard 3 is about to wait for completion of cross-shard transaction validation of TxAB. In this way, in each organization in the shard, TxAB, TxBC, and TxCA wait for each other cyclically, and a deadlock cycle shown in (B) in FIG. 10 is formed in each organization. It can be seen based on two deadlock cycles corresponding to the two organizations in (B) in FIG. 10 that the two deadlock cycles corresponding to the two organizations are the same. Therefore, respective deadlock resolution nodes of the two organizations resolve deadlocks according to a same deadlock resolution rule, so that deadlock resolution results between the organizations are consistent.

It should be understood that FIG. 10 shows a case involving only three transactions. In an actual case, there may involve more transactions. In this case, there may form a plurality of deadlock cycles, and these deadlock cycles are directly or indirectly connected to each other. In this way, these deadlock cycles form a dependency graph. When the dependency graph is in a convergent state, a deadlock resolution node may perform a deadlock resolution operation on the dependency graph. In addition, after a deadlock cycle is constructed, a dependency graph can reach a convergent state. In this case, the dependency graph includes only one deadlock cycle.

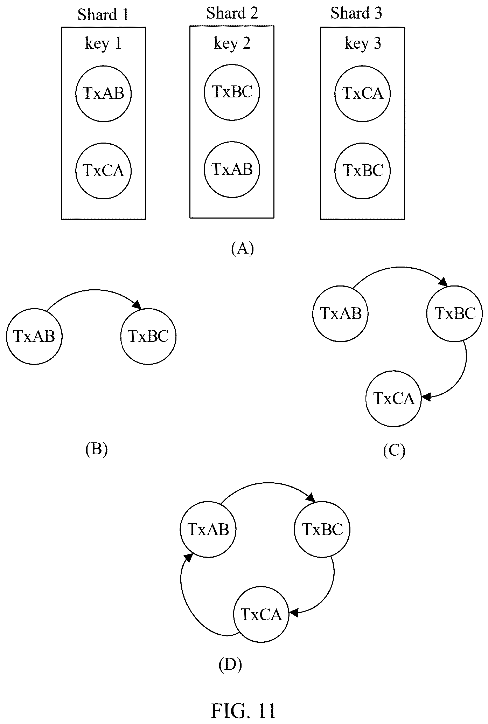

In addition, FIG. 10 describes only one manner of constructing the dependency graph. Alternatively, the dependency graph may be constructed in another manner. For example, as shown in (A) in FIG. 11, a transfer transaction continues to be used as an example. In addition, a user 1 makes a transfer to a user 2, the user 2 makes a transfer to a user 3, and the user 3 makes a transfer to the user 1. A transaction initiated by the user 1 is TxAB, a transaction initiated by the user 2 is TxBC, and a transaction initiated by the user 3 is TxCA. It is assumed that a key key 1 of the user 1 is stored on a shard 1, a key 2 of the user 2 is stored on a shard 2, and a key 3 of the user 3 is stored on a shard 3. In this case, transactions on the shard 1 include TxAB and TxCA, transactions on the shard 2 include TxAB and TxBC, and transactions on the shard 3 include TxBC and TxCA. A sequence of the transactions in the shard 1 is TxAB first and TxCA second; a sequence of the transactions in the shard 2 is TxBC first and TxAB second; and a sequence of the transactions in the shard 3 is TxCA first and TxBC second. If a deadlock detection task is triggered in this case, a deadlock resolution node may separately collect the sequences of the transactions in the shards 1, 2, and 3 and the corresponding transactions when executing the deadlock detection task. Then, the deadlock resolution node may use the 1^{st} transaction that needs to be validated cross shards (that is, the transaction TxAB) in the shard 1 as a target (certainly, which may alternatively use a transaction in another shard as a target), and search for the target in another shard. Because the transaction TxAB exists in the shard 1, the deadlock resolution node may consider that all transactions after the transaction TxAB in the shard 2 have a dependency relationship with the transaction TxAB, and sequentially connect these transactions, to construct a dependency graph. Because there are only the transactions TxAB and TxBC in the shard 2, the constructed dependency graph may be shown in (B) in FIG. 11. Then, the deadlock resolution node uses the 1^{st} transaction that needs to be validated cross shards (that is, the transaction TxBC) in the shard 2 as a target, and searches for the target in another shard. Because the transaction TxBC exists in the shard 3, the deadlock resolution node may consider that all transactions after the transaction TxBC in the shard 3 have a dependency relationship with the transaction TxBC, and sequentially add these transactions to the dependency graph constructed in a previous phase, to construct a dependency graph shown in (C) in FIG. 11. Then, the deadlock resolution node uses the 1^{st} transaction that needs to be validated cross shards (that is, the transaction TxCA) in the shard 3 as a target, and searches for the target in another shard. Because the transaction TxCA exists in the shard 1, the deadlock resolution node may consider that all transactions after the transaction TxCA in the shard 1 have a dependency relationship with the transaction TxCA, and sequentially add these transactions to the dependency graph constructed in the previous phase, to construct a dependency graph shown in (D) in FIG. 11. In this way, a dependency graph in a convergent state is constructed.

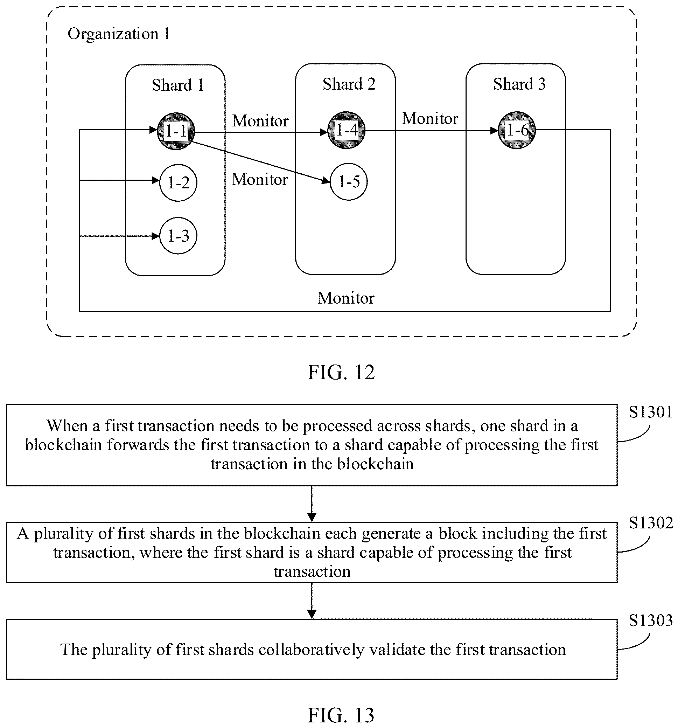

In embodiments, in the structure of the consortium blockchain shown in FIG. 4 or FIG. 7, nodes in different organizations in each shard may select primary nodes in the organizations according to a consistency algorithm (for example, Paxos, Raft, or ZAB). Although the primary node may be selected in this manner, for an organization in a shard, the organization requires that a quantity of nodes belonging to the organization in the shard be greater than three nodes. As a result, a primary node selection scenario is excessively narrow, and an excessive quantity of nodes means more costs. In view of this, an embodiment of this application provides a primary node selection solution. In the primary node selection solution, a cyclic sentinel mechanism is mainly used to select a primary node, but no additional sentinel cluster is added. Instead, a primary node in an organization in an adjacent shard serves as a sentinel of a node in the organization in another shard, and monitors a node in the another shard. In addition, the primary node serving as the sentinel randomly selects or assigns a node as a primary node for a node in the corresponding organization in the another shard. In addition, if the primary node in the corresponding organization in the another shard is abnormal (for example, when the primary node breaks down), the primary node serving as the sentinel may reselect or reassign a node from the corresponding organization in the shard as a primary node. For example, when a primary node in an organization 1 in a shard 1 serves as a sentinel of a node in the organization 1 in a shard 2, if a primary node in the organization 1 in the shard 2 breaks down, the primary node in the organization 1 in the shard 1 may reselect a node in the organization 1 in the shard 2 as a primary node. After all shards use this primary node selection mechanism, a sentinel ring can be obtained. For example, as shown in FIG. 12, there are three shards in a consortium blockchain. A shard 1 includes nodes 1-1, 1-2, and 1-3 that belong to an organization 1, a shard 2 includes nodes 1-4 and 1-5 that belong to the organization 1, and a shard 3 includes a node 1-6 that belongs to the organization 1. In this case, the node 1-6 in the shard 3 may serve as a sentinel of the node that belongs to the organization 1 and that is in the shard 1, and assign the node 1-1 as a primary node in the organization in the shard 1; the node 1-1 in the shard 1 may serve as a sentinel of the node that belongs to the organization 1 and that is in the shard 2, and assign the node 1-4 as a primary node in the organization in the shard 2; and the node 1-4 in the shard 2 may serve as a sentinel of the node that belongs to the organization 1 and that is in the shard 3, and assign the node 1-6 as a primary node in the organization in the shard 3. In addition, in FIG. 12, when detecting that the node 1-1 breaks down, the node 1-6 may assign the node 1-2 as a primary node, or assign the node 1-3 as a primary node. In this way, in an organization in a shard, as long as there is a node that does not break down, primary node re-selection recovery of all shards can be implemented. In addition, in this cyclic sentinel mechanism, when there is no primary node in nodes of an organization in all shards, a primary node may be selected according to a consistency algorithm among nodes that belong to the organization in any shard, and then the selected primary node may serve as a sentinel of a next shard of the shard. In some embodiments, when a blockchain is a public chain, the foregoing described sentinel primary node selection mechanism may also be used. In this case, a primary node in one shard may serve as a sentinel in another shard. For details, refer to the foregoing descriptions. Details are not described herein again. It should be understood that FIG. 12 is described by using the nodes included in one organization in three shards as an example. For a sentinel primary node selection mechanism in a case in which a quantity of shards is another quantity, and/or a quantity of organizations is another quantity, refer to the descriptions in FIG. 12. Details are not described herein again.

It should be noted that, in the foregoing described working process of the blockchain, one transaction is used as an example for description. When there are a plurality of transactions, for a working process of the blockchain provided in embodiments of this application, refer to a working process of the one transaction described above. Details are not described herein again. In addition, when there are the plurality of transactions, one client may commit the plurality of transactions to a shard, or a plurality of different clients may commit the plurality of transactions to a shard. This may be specifically determined based on an actual situation, and is not limited herein. In addition, when there are the plurality of transactions, and one client commits the plurality of transactions to the shard, the client may commit transaction requests related to the plurality of transactions to one endorsement node, or may commit the transaction requests to different endorsement nodes. This is not limited herein. When there are the plurality of transactions, and different clients commit the plurality of transactions to the shard, the different clients may commit transaction requests related to the committed transactions respectively required by the clients to one endorsement node, or may commit the transaction requests to different endorsement nodes. This is not limited herein. Certainly, different clients may commit transactions to a same shard, or may commit transactions to different shards. This may be specifically determined based on an actual situation, and is not limited herein. It should be understood that when cross-shard transaction validation needs to be performed between different shards, the shards collaboratively perform cross-shard validation.

The foregoing describes the blockchain provided in embodiments of this application. Based on the foregoing content, an embodiment of this application further provides a transaction processing method.

For example, FIG. 13 is a schematic flowchart of a transaction processing method according to an embodiment of this application. The transaction processing method is mainly applied to a blockchain, and there are a plurality of shards in the blockchain. Each shard in the blockchain has a capability of independently processing a transaction. In other words, each shard in the blockchain includes a consensus cluster and a ledger node. A consensus cluster on a shard is configured to generate a block in the shard. A ledger node on a shard is configured to: validate a transaction included in a block in the shard, and record a state (or state data) of the shard.

As shown in FIG. 13, the transaction processing method may include the following steps.

S1301: When a first transaction needs to be processed across shards, one shard in the blockchain forwards the first transaction to a shard capable of processing the first transaction in the blockchain.

In this embodiment, when the first transaction needs to be processed across shards, the one shard in the blockchain forwards the first transaction to the shard capable of processing the first transaction in the blockchain (which is briefly referred to as a "first shard" below). For example, the shard that forwards the first transaction may be any shard in the blockchain; and the shard may have a capability of processing the first transaction, or may not have a capability of processing the first transaction. If a key included in the first transaction is stored on the shard, the shard has the capability of processing the first transaction. Otherwise, the shard does not have the capability of processing the first transaction.

S1302: A plurality of first shards in the blockchain each generate a block including the first transaction, where the first shard is a shard capable of processing the first transaction.

In this embodiment, because each shard in the blockchain has the capability of independently processing the transaction, each first shard in the blockchain may generate the block including the first transaction after obtaining the first transaction.

S1303: The plurality of first shards collaboratively validate the first transaction.

In this embodiment, after each first shard generates the block including the first transaction, the plurality of first shards may collaboratively validate the first transaction, in other words, all the plurality of first shards may participate in validation of the first transaction. Specifically, each first shard may validate the first transaction in the block generated by the first shard, to generate a validation result. Then, a node in the blockchain may collect a validation result of each first shard, to determine whether the first transaction is valid. The node that collects the validation result may be, but is not limited to, referred to as a "coordinator node". The node that collects the validation result may be a node in a first shard, or may be a node in another shard. This is not limited herein. After the coordinator node collects the validation result of each first shard, the coordinator node may directly determine whether the first transaction is valid based on the validation result, or may first validate the validation result, and then send the validation result to each first shard, so that each first shard determines whether the first transaction is valid based on the validation result. Certainly, the coordinator node may alternatively distribute the collected validation result to each shard, so that the shard validates the validation result, and the shard determines whether the first transaction is valid.

In this way, in the blockchain, when a transaction involves the plurality of shards, each shard may package the transaction into a block, and the plurality of shards collaboratively validate the transaction. When keys included in a transaction are stored on different shards, the different shards may collaboratively validate the transaction cross shards. Each shard has the capability of independently processing the transaction, which allows a transaction ordering service in the blockchain to be horizontally scaled without limit. In this manner, the blockchain is divided into shards in terms of a network and a state, and scalability of the blockchain is improved.

In some embodiments, to ensure that execution of the first transaction can be completed, before S1301, the node in the blockchain may read a state on each first shard, to ensure that execution of the first transaction is completed. The node that reads the state on the first shard may be, but is not limited to, referred to as an "endorsement node". After reading the state on each first shard, the node may endorse the first transaction. For example, the node may be a node in the first shard, or may be a node in another shard. This is not limited herein.

In some embodiments, when a second shard that endorses a second transaction in the blockchain is different from a third shard that processes the second transaction, an endorsement node related to the second shard in the blockchain may read state data in the third shard, to endorse the second transaction. In this way, cross-shard endorsement can be implemented.

In some embodiments, when a fourth shard in the blockchain receives a third transaction, and the third transaction is irrelevant to the fourth shard, the fourth shard forwards the third transaction to a fifth shard capable of processing the third transaction in the blockchain. In this way, it can be ensured that the third transaction is processed.

In some embodiments, a deadlock resolution node may be configured in the blockchain. In this case, when a plurality of transactions on different shards in the blockchain wait for each other, the deadlock resolution node in the blockchain may identify a deadlock in the blockchain and resolve the deadlock. In this way, the deadlock is resolved. For example, a case in which the plurality of transactions on different shards wait for each other may be a case in which sequences of the plurality of transactions on different shards are different, and the plurality of transactions wait for each other's validation results. In addition, the deadlock in the blockchain may be but is not limited to being formed due to a transaction dependency. In this case, there may be a plurality of deadlock resolution nodes in the blockchain. When there are the plurality of deadlock resolution nodes, different deadlock resolution nodes may resolve deadlocks according to a same rule, to ensure consistency of deadlock resolution results of the different deadlock resolution nodes.

In some embodiments, in the blockchain, a node in one shard may be a sentinel node in another shard (in other words, the node in the one shard serves as a sentinel in the another shard), each shard has may an independent sentinel node, and sentinel nodes in different shards are different. In this way, a node in another shard can be monitored by using one shard in the blockchain, and no additional sentinel cluster needs to be added. This reduces monitoring costs.

It should be understood that, in this embodiment, each shard in the blockchain can independently process the transaction. When a transaction needs to be processed cross shards, the shards communicate with each other to complete data exchange, and transaction distribution and coordination. A procedure of processing transactions cross shards may include:
A. Cross-shard data exchange step--If the transaction needs to read states/records stored on different shards during execution of the transaction, the cross-shard data exchange step is required to collect states/records of all related shards and ensure that execution of the transaction is completed.
B. Cross-shard transaction distribution step-After pre-execution of the transaction is completed, the transactions need to be packaged into a block in a specific sequence through consensus. If the transaction needs to be processed across shards, the cross-shard distribution step is required to distribute the transaction to all involved shards and ensure that each shard completes consensus and generates a block including the transaction.
C. Cross-shard transaction coordination step--When the transaction needs to be validated, the transaction is committed as valid only when all states pass read-write set validation. If the transaction needs to be validated across shards, the cross-shard coordination step is required to collect validation results of all related shards and determine whether to commit the transaction as valid in all the shards.

In addition, in the blockchain, a configurable sharding strategy may be provided to help a user predefine a mapping relationship between a transaction state key and a shard ID based on specific transaction logic. In addition, a flexible method may alternatively be provided to allow the user to predefine, based on different dimensions, various strategies for obtaining shards through division, including a range-based strategy, an algorithm-based strategy, a relationship-based strategy, a geographical location-based strategy, and the like. Wildcard support may be provided in strategy definition, so that different strategies can be combined and nested. In the blockchain, a function of updating a sharding strategy in all shards may alternatively be provided.

In this embodiment, if a transaction needs to be processed and validated across shards, a blockchain with shards is required to ensure atomicity of the transaction. The blockchain with the sharding function needs to provide a coordination mechanism, to collect validation results of all participating shards in a transaction validation phase and determine whether to commit the transaction on each shard. The blockchain with the sharding needs to provide a unified mechanism for all shards, to detect transaction deadlocks and resolve the deadlocks according to a same rule. A transaction deadlock occurs when a transaction on one shard waits for a lock held by a transaction on another shard, and the transaction on the another shard also waits for a lock held by a first transaction. Each shard in the blockchain needs to deploy a dedicated node that is responsible for identifying existence of deadlocks and resolving the deadlocks by using a same algorithm (for example, a WFG algorithm).

It may be understood that the technical features in the foregoing embodiments or the embodiments may be combined based on an actual situation. A combined solution still falls within the protection scope of this application.

The foregoing describes the blockchain provided in embodiments of this application. Based on the foregoing content, an embodiment of this application further provides a node. The node may be deployed in the blockchain described above. For example, the blockchain includes a first shard and a second shard. A first key (key) is stored in the first shard, and a second key is stored in the second shard. The node may be the endorsement node described above. The node may include a communication module and a processing module. The communication module is mainly responsible for receiving a transaction request from a client. The transaction request is used to request to update the first key and the second key. The processing module is mainly responsible for generating a transaction read-write set based on state data in the first shard and state data in the second shard, and signing the transaction read-write set to obtain an endorsement result. In addition, the communication module may be further responsible for sending the endorsement result to the client.

Based on the method in the foregoing embodiment, an embodiment of this application provides a computer-readable storage medium. The computer-readable storage medium stores a computer program. When the computer program runs on a processor, the processor is enabled to perform the method in the foregoing embodiment.

Based on the method in the foregoing embodiment, an embodiment of this application provides a computer program product. When the computer program product runs on a processor, the processor is enabled to perform the method in the foregoing embodiment.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

It may be understood that various numbers in embodiments of this application are merely used for differentiation for ease of description, and are not used to limit the scope of embodiments of this application.

## Claims

1. A transaction processing method, applied to a blockchain, wherein the blockchain comprises a first shard and a second shard, a first key (key) is stored in the first shard, and a second key is stored in the second shard; and
the method comprises:
obtaining, by the first shard, a first transaction, wherein the first transaction comprises the first key and the second key;
sending, by the first shard, the first transaction to the second shard; and generating a first block comprising the first transaction, and validating the first transaction in collaboration with the second shard; and
receiving, by the second shard, the first transaction from the first shard; and generating a second block comprising the first transaction, and validating the first transaction in collaboration with the first shard.

2. The method according to claim 1, wherein
before sending, by the first shard, the first transaction to the second shard, the method further comprises:
reading state data in the first shard and state data in the second shard, to ensure execution of the first transaction.

3. The method according to claim 1 or 2, wherein the blockchain comprises a coordinator node, and collaboratively validating, by the first shard and the second shard, the first transaction comprises:
respectively sending, by the first shard and the second shard, a first validation result and a second validation result to the coordinator node, wherein the first validation result is a result of validating the first transaction by the first shard, and the second validation result is a result of validating the first transaction by the second shard; and
obtaining, by the coordinator node, the first validation result and the second validation result to determine whether the first transaction is valid.

4. The method according to claim 3, wherein the method further comprises:
when a plurality of transactions on different shards in the blockchain wait for each other, identifying, by a deadlock resolution node in the blockchain, a deadlock in the blockchain, and resolving the deadlock.

5. The method according to claim 4, wherein there are a plurality of deadlock resolution nodes, and different deadlock resolution nodes resolve deadlocks according to a same rule.

6. The method according to claim 1 or 2, wherein the blockchain is a consortium blockchain, and the consortium blockchain comprises a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result; and
collaboratively validating, by the first shard and the second shard, the first transaction comprises:
sending, by the first shard, the first result to a first coordinator node; sending, by the second shard, the second result to the first coordinator node; receiving, by both the first shard and the second shard, a fifth result from the first coordinator node, wherein the fifth result is a validation result of the first result and the second result; processing, by the node that belongs to the first organization and that is in the first shard, the first transaction based on the fifth result; and processing, by the node that belongs to the first organization and that is in the second shard, the first transaction based on the fifth result, wherein the first coordinator node is a node other than nodes in the first shard and nodes in the second shard; and
sending, by the first shard, the third result to a second coordinator node; sending, by the second shard, the fourth result to the second coordinator node; receiving, by both the first shard and the second shard, a sixth result from the second coordinator node, wherein the sixth result is a validation result of the third result and the fourth result; processing, by the node that belongs to the second organization and that is in the first shard, the first transaction based on the sixth result; and processing, by the node that belongs to the second organization and that is in the second shard, the first transaction based on the sixth result, wherein the second coordinator node is a node other than the nodes in the first shard and the nodes in the second shard.

7. The method according to claim 1 or 2, wherein the blockchain is a consortium blockchain, and the consortium blockchain comprises a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result; and
collaboratively validating, by the first shard and the second shard, the first transaction comprises:
sending, by the first shard, the first result to the node that belongs to the first organization and that is in the second shard; validating, by the node that belongs to the first organization and that is in the second shard, the first result and the second result, to obtain a fifth result; sending, by the second shard, the fifth result to the node that belongs to the first organization and that is in the first shard; processing, by the node that belongs to the first organization and that is in the first shard, the first transaction based on the fifth result; and processing, by the node that belongs to the first organization and that is in the second shard, the first transaction based on the fifth result; and
sending, by the first shard, the third result to the node that belongs to the second organization and that is in the second shard; validating, by the node that belongs to the second organization and that is in the second shard, the third result and the fourth result, to obtain a sixth result; sending, by the second shard, the sixth result to the node that belongs to the second organization and that is in the first shard; processing, by the node that belongs to the second organization and that is in the first shard, the first transaction based on the sixth result; and processing, by the node that belongs to the second organization and that is in the second shard, the first transaction based on the sixth result.

8. The method according to claim 1 or 2, wherein the blockchain is a consortium blockchain, and the consortium blockchain comprises a first organization and a second organization; a result of validating the first transaction by a node that belongs to the first organization and that is in the first shard is a first result; a result of validating the first transaction by a node that belongs to the first organization and that is in the second shard is a second result; a result of validating the first transaction by a node that belongs to the second organization and that is in the first shard is a third result; and a result of validating the first transaction by a node that belongs to the second organization and that is in the second shard is a fourth result; and
collaboratively validating, by the first shard and the second shard, the first transaction comprises:
sending, by the first shard, the first result to a coordinator node; sending, by the second shard, the second result to the coordinator node; receiving, by both the first shard and the second shard, a fifth result from the coordinator node, wherein the fifth result is a validation result of the first result and the second result; processing, by the node that belongs to the first organization and that is in the first shard, the first transaction based on the fifth result; and processing, by the node that belongs to the first organization and that is in the second shard, the first transaction based on the fifth result, wherein the coordinator node is a node other than nodes in the first shard and nodes in the second shard; and
sending, by the first shard, the third result to the node that belongs to the second organization and that is in the second shard; validating, by the node that belongs to the second organization and that is in the second shard, the third result and the fourth result, to obtain a sixth result; sending, by the second shard, the sixth result to the node that belongs to the second organization and that is in the first shard; processing, by the node that belongs to the second organization and that is in the first shard, the first transaction based on the sixth result; and processing, by the node that belongs to the second organization and that is in the second shard, the first transaction based on the sixth result.

9. The method according to any one of claims 6 to 9, wherein the blockchain comprises a first deadlock resolution node and a second deadlock resolution node; and
the method further comprises:
when sequences of a plurality of transactions in the first organization in different shards of the blockchain are different, and the plurality of transactions in the first organization wait for each other's validation results, identifying, by the first deadlock resolution node, a deadlock formed due to a transaction dependency in the first organization, and resolving the deadlock; and
when sequences of a plurality of transactions in the second organization in different shards of the blockchain are different, and the plurality of transactions in the second organization wait for each other's validation results, identifying, by the second deadlock resolution node, a deadlock formed due to a transaction dependency in the second organization, and resolving the deadlock.

10. The method according to claim 9, wherein the method further comprises:
resolving, by the first deadlock resolution node and the second deadlock resolution node, the deadlocks according to a same rule.

11. The method according to any one of claims 1 to 10, wherein the blockchain is the consortium blockchain, the consortium blockchain comprises the first organization and the second organization, the first shard comprises a first primary node and a second primary node, the first primary node belongs to the first organization, and the second primary node belongs to the second organization; and
the method further comprises:
monitoring, by the first primary node, the node that belongs to the first organization and that is in the second shard, and selecting a third primary node from the second shard, wherein the third primary node belongs to the first organization;
monitoring, by the second primary node, the node that belongs to the second organization and that is in the second shard, and selecting a fourth primary node from the second shard, wherein the fourth primary node belongs to the second organization;
monitoring, by the third primary node, the node that belongs to the first organization and that is in the first shard, and selecting a fifth primary node from the first shard when the first primary node is abnormal, wherein the fifth primary node belongs to the first organization; and
monitoring, by the fourth primary node, the node that belongs to the second organization and that is in the first shard, and selecting a sixth primary node from the first shard when the second primary node is abnormal, wherein the sixth primary node belongs to the second organization.

12. The method according to any one of claims 1 to 10, wherein the method further comprises:
monitoring, by a first primary node in the first shard, a node in the second shard, and selecting a second primary node from the second shard;
monitoring, by the second primary node, a node in the second shard, and selecting a third primary node from the second shard; and
monitoring, by the third primary node, a node in the first shard, and selecting a fourth primary node from the first shard when the first primary node is abnormal.

13. A transaction processing method, applied to a blockchain, wherein the blockchain comprises a plurality of shards, and the method comprises:
when a first transaction needs to be processed across shards, forwarding, by one shard in the blockchain, the first transaction to a shard capable of processing the first transaction in the blockchain;
generating, by each of a plurality of first shards in the blockchain, a block comprising the first transaction, wherein the first shard is a shard capable of processing the first transaction; and
collaboratively validating, by the plurality of first shards, the first transaction.

14. The method according to claim 13, wherein each shard in the blockchain has a capability of independently processing a transaction.

15. The method according to claim 13 or 14, wherein before forwarding, by the one shard in the blockchain, the first transaction to the shard capable of processing the first transaction in the blockchain, the method further comprises:
reading a state of each of the plurality of first shards, to ensure completion of execution of the first transaction.

16. The method according to any one of claims 13 to 15, wherein the method further comprises:
when a second shard that endorses a second transaction in the blockchain is different from a third shard that processes the second transaction, reading, by an endorsement node related to the second shard in the blockchain, a state of the third shard, to endorse the second transaction.

17. The method according to any one of claims 13 to 16, wherein the method further comprises:
when a fourth shard in the blockchain receives a third transaction, and the third transaction is irrelevant to the fourth shard, forwarding, by the fourth shard, the third transaction to a fifth shard capable of processing the third transaction in the blockchain.

18. The method according to any one of claims 13 to 17, wherein collaboratively validating, by the plurality of first shards, the first transaction in the block generated by each first shard comprises:
collecting a validation result of each first shard, to determine whether the first transaction is valid, wherein one validation result is obtained by one first shard by validating the first transaction in a block generated by the first shard.

19. The method according to any one of claims 13 to 18, wherein the method further comprises:
when a plurality of transactions on different shards in the blockchain wait for each other, identifying, by a deadlock resolution node in the blockchain, a deadlock in the blockchain, and resolving the deadlock.

20. The method according to claim 19, wherein there are a plurality of deadlock resolution nodes, and different deadlock resolution nodes resolve deadlocks according to a same rule.

21. The method according to any one of claims 13 to 20, wherein the shards in the blockchain are obtained through division according to a user-configured sharding strategy.

22. The method according to any one of claims 13 to 21, wherein in the blockchain, a node in one shard is a sentinel node in another shard, each shard has an independent sentinel node, and sentinel nodes in different shards are different.

23. A computer-readable storage medium, wherein the computer-readable storage medium stores a computer program, and when the computer program runs on a processor, the processor is enabled to perform the method according to any one of claims 1 to 12, or perform the method according to any one of claims 13 to 22.

24. A computer program product, wherein when the computer program product runs on a processor, the processor is enabled to perform the method according to any one of claims 1 to 12, or perform the method according to any one of claims 13 to 22.
